# EUROPEAN PATENT APPLICATION

(11) **EP 1 798 701 A2**
(43) Date of publication of application: **20.06.2007**
(21) Application number: 06255067.8
(22) Date of filing: 29.09.2006
(51) Int. Cl.: G09B 5/00, G09B 7/00

(54) **Cognitive training using a maximum likelihood assessment procedure**

(30) Priority: 13.12.2005 US 749979 P; 31.08.2006 US 468814
(71) Applicant: Posit Science Corporation, San Francisco, CA 94104-3802 (US)
(72) Inventor: Chan, Samuel Chungchi, Alameda, CA 94501 (US); Hardy, Joseph L., El Cerrito, CA 94530 (US); Mahncke, Henry W., San Francisco, CA 94132 (US)
(74) Representative: O'Connell, David Christopher

(57) **Abstract**

Computer-implemented method for improving cognition and memory in an aging adult, utilizing a computing device to present stimuli to the adult, and to record responses from the adult. A psychophysical threshold for an aging adult with respect to stimuli in a cognitive development exercise is determined using a maximum likelihood procedure, such as QUEST (quick estimation by sequential testing) or ZEST (zippy estimation by sequential testing). The threshold is a stimulus intensity value associated with a specified performance level of the adult. A plurality of trials in the exercise are then performed with stimuli at or near the determined threshold to improve the adult's cognition and memory skills. This threshold determination and exercise performance may be repeated in an iterative manner to further improve the adult's cognition and memory skills.

## Description

### CROSS REFERENCE TO RELATED APPLICATION(S)

This application claims the benefit of the following US Provisional Patent Application, which is incorporated herein in its entirety for all purposes: PS.0117 US60/749979 12/13/05 ZEST PROGRESSIONS IN HiFi ASSESSMENTS

This application is a continuation of U.S. Patent Application Serial No. 11/465,290, filed 8/17/2006, entitled "ASSESSMENT IN COGNITIVE TRAINING EXERCISES"

### FIELD OF THE INVENTION

This invention relates in general to the use of brain health programs utilizing brain plasticity to enhance human performance and correct neurological disorders, and more specifically, to a method for assessing participant thresholds for respective exercises.

### BACKGROUND OF THE INVENTION

Almost every individual has a measurable deterioration of cognitive abilities as he or she ages. The experience of this decline may begin with occasional lapses in memory in one's thirties, such as increasing difficulty in remembering names and faces, and often progresses to more frequent lapses as one ages in which there is passing difficulty recalling the names of objects, or remembering a sequence of instructions to follow directions from one place to another. Typically, such decline accelerates in one's fifties and over subsequent decades, such that these lapses become noticeably more frequent. This is commonly dismissed as simply "a senior moment" or "getting older." In reality, this decline is to be expected and is predictable. It is often clinically referred to as "age-related cognitive decline," or "age-associated memory impairment." While often viewed (especially against more serious illnesses) as benign, such predictable age-related cognitive decline can severely alter quality of life by making daily tasks (e.g., driving a car, remembering the names of old friends) difficult.

In many older adults, age-related cognitive decline leads to a more severe condition now known as Mild Cognitive Impairment (MCI), in which sufferers show specific sharp declines in cognitive function relative to their historical lifetime abilities while not meeting the formal clinical criteria for dementia. MCI is now recognized to be a likely prodromal condition to Alzheimer's Disease (AD) which represents the final collapse of cognitive abilities in an older adult. The development of novel therapies to prevent the onset of this devastating neurological disorder is a key goal for modem medical science.

The majority of the experimental efforts directed toward developing new strategies for ameliorating the cognitive and memory impacts of aging have focused on blocking and possibly reversing the pathological processes associated with the physical deterioration of the brain. However, the positive benefits provided by available therapeutic approaches (most notably, the cholinesterase inhibitors) have been modest to date in AD, and are not approved for earlier stages of memory and cognitive loss such as age-related cognitive decline and MCI.

Cognitive training is another potentially potent therapeutic approach to the problems of age-related cognitive decline, MCI, and AD. This approach typically employs computer- or clinician-guided training to teach subjects cognitive strategies to mitigate their memory loss. Although moderate gains in memory and cognitive abilities have been recorded with cognitive training, the general applicability of this approach has been significantly limited by two factors: 1) Lack of Generalization; and 2) Lack of enduring effect.

Lack of Generalization: Training benefits typically do not generalize beyond the trained skills to other types of cognitive tasks or to other "real-world" behavioral abilities. As a result, effecting significant changes in overall cognitive status would require exhaustive training of all relevant abilities, which is typically infeasible given time constraints on training.

Lack of Enduring Effect: Training benefits generally do not endure for significant periods of time following the end of training. As a result, cognitive training has appeared infeasible given the time available for training sessions, particularly from people who suffer only early cognitive impairments and may still be quite busy with daily activities.

As a result of overall moderate efficacy, lack of generalization, and lack of enduring effect, no cognitive training strategies are broadly applied to the problems of age-related cognitive decline, and to date they have had negligible commercial impacts. The applicants believe that a significantly innovative type of training can be developed that will surmount these challenges and lead to fundamental improvements in the treatment of age-related cognitive decline. This innovation is based on a deep understanding of the science of "brain plasticity" that has emerged from basic research in neuroscience over the past twenty years which only now through the application of computer technology can be brought out of the laboratory and into the everyday therapeutic treatment.

Some cognition improvement exercises, such as embodiments of the Tell Us Apart exercise in the HiFi program described herein, are designed to force participants to identify rapid spectro-temporal patterns (brief synthesized formant transitions) in order to classify consonants by place of articulation under conditions of backward masking from a following vowel. The spectral characteristics of these syllables (as dictated by formant frequencies) closely parallel the patterns that occur in natural productions of the sounds, and they can usually be identified as the speech sounds they are intended to represent. However, since formant frequencies constitute only a (comparatively informative) subset of the range of acoustic cues that accompany human productions of the consonants, sounds synthesized in this way do not closely resemble natural speech in a general sense.

As a result, many participants may be unable to match these synthesized sounds, presented in isolation, with the intended syllables based on their previous linguistic experience, and are therefore unable to progress through the easiest levels of the exercise, which almost certainly involve sound distinctions that are well above their actual thresholds for detection.

More generally, in exercises that use synthesized speech to target specific neurological deficits, it is desired that the effectiveness of a task not be severely limited by the overall naturalness of the speech stimuli, since it is often necessary to reduce the acoustic cues available to the listener to a small, carefully controlled set. Thus, a way is needed to help listeners attend to the set of cues relevant to a synthetic speech distinction so that they can reliably identify sounds and progress through the exercise.

Therefore, what is needed is an overall training program that will significantly improve fundamental aspects of brain performance and function relevant to the remediation of the neurological origins and consequences of age-related cognitive decline. Additionally, improved means for helping listeners attend to the set of cues relevant to a synthetic speech distinction to reliably identify sounds and progress through exercises that utilize such distinctions.

Each of the exercises described generally utilizes one or more types of audial stimuli with characteristic attributes that the participant (i.e., the aging adult) must perceive and respond to in performing trials. Each participant generally has a threshold with respect to each type of stimuli such that when stimuli are presented with intensities below this threshold, the participant is unlikely to exceed some specified performance level, e.g., is likely to answer incorrectly some specified percentage of the trials, e.g., 69%.

However, prior art embodiments of such cognition enhancement exercises do not facilitate the determination of this threshold for participants. Thus, systems and methods for assessing participant thresholds for cognition enhancement exercises are desired.

### SUMMARY

Various embodiments of a method for improving cognition and memory in an aging adult, utilizing a computing device to present stimuli to the adult, and to record responses from the adult, are presented.

Maximum likelihood procedure based psychophysical threshold determination, such as described herein with respect to various exemplary cognitive training exercises, may facilitate more effective use of such exercises by establishing a stimulus intensity for each exercise that is substantially optimal for improving the cognitive skills of the adult subject.

A psychophysical threshold for an aging adult with respect to stimuli in a cognitive training exercise may be determined. The threshold may comprise a stimulus intensity value associated with a specified performance level of the adult, and may be determined using a maximum likelihood procedure, such as, for example, a QUEST (quick estimation by sequential testing) threshold procedure, or a ZEST (zippy estimation by sequential testing) threshold procedure.

For example, similar to the various assessment methods described herein, in one embodiment, determining the psychophysical threshold may include initializing a first track to a first intensity value that is below an initial anticipated threshold, where the initial anticipated threshold comprises or includes an initial estimate of a stimulus intensity value for stimuli corresponding to a specified performance level of the adult. A second track may be initialized to a second stimulus intensity value that is above the initial anticipated threshold. A stimulus may then be presented to the adult via the computing device in accordance with the stimulus intensity value of a specified one of either the first track or the second track. For example, the stimuli may be presented via one or more of: headphones attached to the computing device, speakers attached to the computing device, and/or a display device attached to the computing device. A response to the stimulus may then be received from the adult via the computing device, and the stimulus intensity value of the specified track modified based on the adult's response in accordance with the maximum likelihood procedure. For example, in one embodiment, for each track, modifying the stimulus intensity value of the specified track based on the adult's response may include increasing the stimulus intensity value if the adult responds correctly in a specified percentage of trials, and decreasing the stimulus intensity value if the adult responds incorrectly in the specified percentage of trials.

In one embodiment, an indication of whether the adult responded correctly to the stimulus may be provided. For example, a respective sound and/or graphical indication indicating correctness or incorrectness may be presented. Additionally, or alternatively, points may be awarded (or possibly subtracted) based on the correctness of the adult's response.

This presenting, receiving, and modifying may be performed with respect to each of a plurality of stimuli in an iterative manner to determine respective final stimulus intensity values for the first track and the second track, after which a threshold for the adult may be determined based on the respective final stimulus intensity values for the first track and the second track, where the threshold is or includes the stimulus intensity value associated with the specified performance level of the adult. In other words, an assessment version of the cognitive training exercise may be performed to determine the psychophysical threshold for the adult with respect to that exercise. For example, determining a threshold for the adult based on the respective final stimulus intensity values for the first track and the second track may include averaging the respective final stimulus intensity values for the first track and the second track to determine the threshold for the adult. In one embodiment, averaging the respective final stimulus intensity values for the first track and the second track to determine the threshold for the adult may include rounding the average of the respective final stimulus intensity values for the first track and the second track to determine the threshold for the adult. Please see the various assessment methods described herein for particular examples of such threshold determination with respect to specific exercises.

In one embodiment, performing the presenting, requiring, and modifying, one or more times in an iterative manner may include performing trials in the first track and the second track in an alternating manner, or, alternatively, performing trials in the first track and the second track randomly with equal probability, the idea being to perform substantially the same number of trials in each track over the duration of the determination process. In some embodiments, the presenting, requiring, and modifying, may be performed (iteratively) until either the stimulus intensity values of the first track and the second track have converged to stimulus intensity values within a specified confidence interval, where the stimulus intensity values are within a specified distance from each other, or a specified number of trials have been conducted for each track. In other words, in some embodiments, trials may be performed until one of these conditions obtains.

In one embodiment, the presenting, requiring, and modifying described above may compose performing a trial (in the determination process or assessment exercise). Moreover, the method may include saving various parameters or values for each trial performed, including, for example, one or more of: which track was used in the trial; the stimulus intensity value used in the trial; the stimulus presented to the adult; button to response assignments; the series of button selections by the adult; the correctness or incorrectness of the adult's response; the mean of a posterior probability distribution function for the maximum likelihood procedure; and the standard deviation of the posterior probability distribution function for the maximum likelihood procedure, among others.

Additionally, in some embodiments, the method may further include initializing various parameters, such as, for example, one or more of: initial stimulus intensity values of the first and second tracks; the standard deviation of a cumulative Gaussian psychometric function for the maximum likelihood procedure; and the standard deviation of a prior threshold distribution for the maximum likelihood procedure, among others.

In one embodiment, the method may include determining the initial anticipated threshold based on one or more of: the age of the adult, calibration trials performed by the adult, and/or calibration trials performed by other adults.

A plurality of trials in the exercise may then be performed with stimuli at or near the determined threshold to improve the adult's cognition and memory skills. In other words, the exercise may be performed based on the determined threshold. For example, the adult may be trained through repetitive trials at or near the determined threshold to increase the benefit of performing trials in the cognitive training exercise.

In some embodiments, performing a plurality of trials in the exercise with stimuli at or near the determined threshold may include: providing a set of stimuli for the cognitive training exercise. For each stimulus in the set of stimuli, the stimulus may be presented to the adult at or near the determined threshold via the computing device. A response to the presented stimulus may be received from the adult via the computing device, and a determination made as to whether the response is correct. An indication may then be provided as to whether the response is correct. The presenting, receiving, determining, and indicating may be repeated for each stimulus in the set of stimuli in an iterative manner to improve the adult's cognitive and memory skills. In one embodiment, this presenting, receiving, determining, and indicating for each stimulus in the set of stimuli may include increasing a difficulty level of the stimulus as the adult progresses through the exercise. Note that in preferred embodiments, the stimuli used in determining the psychophysical threshold may be or include a representative subset of the set of stimuli used in performing the plurality of trials in the exercise.

In one embodiment, presenting the stimulus to the adult at or near the determined threshold via the computing device may include presenting aural stimuli, e.g., spoken words phonemes, instructions, etc., and/or visual stimuli, e.g., images, text, etc., to the adult. Various examples of each are provided above with respect to the different exercise assessments described herein.

In preferred embodiments, the method may further include repeating the determining the psychophysical threshold and performing the plurality of trials in the exercise one or more times in an iterative manner to improve the adult's cognitive and memory skills. For example, the repetitions may be performed over a plurality of sessions, e.g., over days, weeks, or even months, as noted above.

It should be noted that any of the techniques, parameters, and aspects disclosed above with respect to any of the various exercises and assessment methods described herein may be used with respect to any others of the exercises and assessment methods, as desired. In other words, any of the particular details described above with respect to any specific method may be used with respect to any of the other methods disclosed herein as desired, the above descriptions being meant to be exemplary only, and not to restrict embodiments of the invention to any particular form, appearance, or function.

Other features and advantages of the present invention will become apparent upon study of the remaining portions of the specification and drawings.

### BRIEF DESCRIPTION OF THE DRAWINGS

FIGURE 1 is a block diagram of a computer system for executing a program according to some embodiments of the present invention;

FIGURE 2 is a block diagram of a computer network for executing a program according to some embodiments of the present invention;

FIGURE 3 is a chart illustrating frequency/energy characteristics of two phonemes within the English language;

FIGURE 4 is a chart illustrating auditory reception of a phoneme by a subject having normal receptive characteristics, and by a subject whose receptive processing is impaired;

FIGURE 5 is a chart illustrating stretching of a frequency envelope in time, according to one embodiment of the present invention;

FIGURE 6 is a chart illustrating emphasis of selected frequency components, according to one embodiment of the present invention;

FIGURE 7 is a chart illustrating up-down frequency sweeps of varying duration, separated by a selectable inter-stimulus-interval (ISI), according to one embodiment of the present invention;

FIGURE 8 is a pictorial representation of a game selection screen according to one embodiment of the present invention;

FIGURE 9 is a screen shot of an initial screen in the exercise High or Low;

FIGURE 10 is a screen shot of a trial within the exercise High or Low;

FIGURE 11 is a screen shot during a trial within the exercise High or Low showing progress within a graphical award portion of the screen;

FIGURE 12 is a screen shot showing a completed picture within a graphical award portion of the screen during training of the exercise High or Low;

FIGURE 13 is a screen shot showing alternative graphical progress during training within the exercise High or Low;

FIGURE 14 is a screen shot showing a reward animation within the exercise High or Low;

FIGURE 15 is a flow chart illustrating advancement through the processing levels within the exercise High or Low;

FIGURE 16 is a selection screen illustrating selection of the next exercise in the training of HiFi, particularly the exercise Tell us Apart;

FIGURE 17 is an initial screen shot within the exercise Tell us Apart;

FIGURE 18 is a screen shot within the exercise Tell us Apart particularly illustrating progress in the graphical award portion of the screen;

FIGURE 19 is a screen shot within the exercise Tell us Apart illustrating an alternative progress indicator within the graphical award portion of the screen;

FIGURE 20 is a screen shot of a trial within the exercise Match It;

FIGURE 21 is a screen shot of a trial within the exercise Match It particularly illustrating selection of one of the available icons;

FIGURE 22 is a screen shot within the exercise Match It illustrating sequential selection of two of the available icons during an initial training portion of the exercise;

FIGURE 23 is a screen shot within the exercise Match It illustrating sequential selection of two of the available icons;

FIGURE 24 is a screen shot within the exercise Match It illustrating an advanced training level having 16 buttons;

FIGURE 25 is a screen shot within the exercise Sound Replay illustrating two icons for order association with aurally presented phonemes;

FIGURE 26 is a screen shot within the exercise Sound Replay illustrating six icons for order association with two or more aurally presented phonemes;

FIGURE 27 is a screen shot within the exercise Listen and Do illustrating an initial training module of the exercise;

FIGURE 28 is a screen shot within the exercise Listen and Do illustrating a moderately complex scene for testing;

FIGURE 29 is a screen shot within the exercise Listen and Do illustrating a complex scene for testing;

FIGURE 30 is a screen shot within the exercise Story Teller illustrating an initial training module of the exercise;

FIGURE 31 is a screen shot within the exercise Story Teller illustrating textual response possibilities to a question;

FIGURE 32 is a screen shot within the exercise Story Teller illustrating graphical response possibilities to a question;

FIGURE 33 illustrates an exemplary interface for the High or Low assessment before the start button is pressed, according to one embodiment;

FIGURE 34 illustrates an exemplary interface for the High or Low assessment, after the start button is pressed, according to one embodiment;

FIGURE 35 flowcharts one embodiment of a method for threshold assessment with respect to the High or Low exercise;

FIGURE 36 illustrates convergence of the durations for two tracks in the High or Low assessment, according to one embodiment;

FIGURE 37 flowcharts one embodiment of a method for assessing or estimating performance of an aging adult on a phoneme comparison exercise, such as the Tell Us Apart exercise;

FIGURE 38 flowcharts one embodiment of a method for assessing or estimating performance of an aging adult on a spatial/auditory memory training exercise, such as the Match It exercise;

FIGURE 39 illustrates one embodiment of a screenshot for the Match It assessment;

FIGURE 40 is a high level flowchart of one embodiment of a method for determining an aging adult's threshold with respect to a serial memory exercise, such as the Sound Replay exercise;

FIGURE 41 illustrates one embodiment of an initial screen of the Sound Replay assessment showing the start button, as an example of the interface before the start button is pressed;

FIGURE 42 illustrates an example of the interface of the Sound Replay assessment after the start button is pressed, according to one embodiment;

FIGURE 43 is a high level flowchart of one embodiment of a method for determining an aging adult's threshold with respect to a serial memory exercise, such as the Listen and Do exercise;

FIGURE 44 illustrates an exemplary screen suitable for use in the Listen and Do assessment or exercise, specifically for instruction sequences of categories 2 and 4;

FIGURE 45 illustrates another exemplary screen suitable for use in the Listen and Do assessment or exercise, specifically for instruction sequences of category 3; and

FIGURE 46 is a high level flowchart of one embodiment of a method for effectively training an adult to improve cognitive and memory skills in the adult.

### DETAILED DESCRIPTION

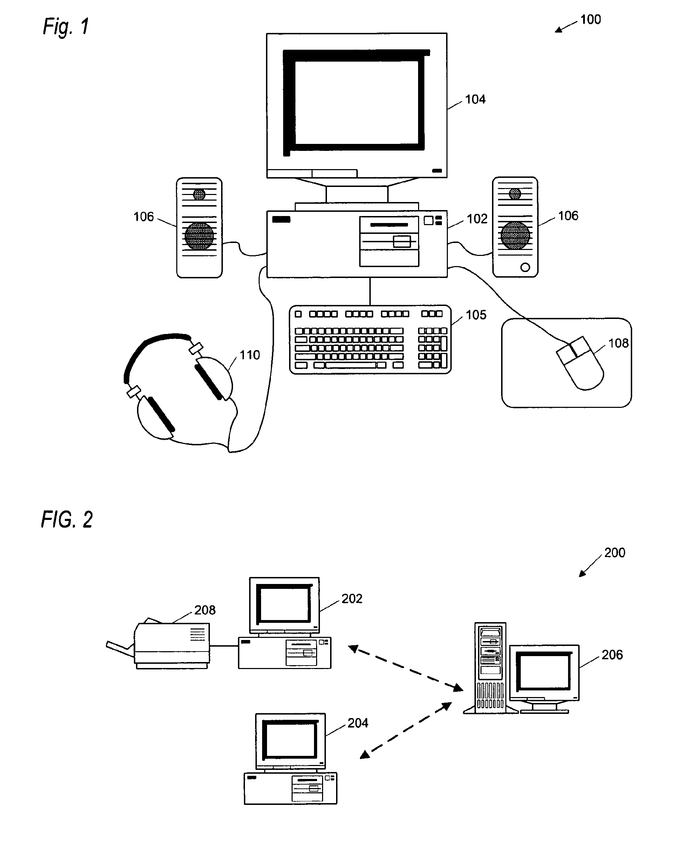

Referring to Figure 1, a computer system 100 is shown for executing a computer program to train, or retrain an individual according to the present invention to enhance their memory and improve their cognition. The computer system 100 contains a computer 102, having a CPU, memory, hard disk and CD ROM drive (not shown), attached to a monitor 104. The monitor 104 provides visual prompting and feedback to the subject during execution of the computer program. Attached to the computer 102 are a keyboard 105, speakers 106, a mouse 108, and headphones 110. The speakers 106 and the headphones 110 provide auditory prompting and feedback to the subject during execution of the computer program. The mouse 108 allows the subject to navigate through the computer program, and to select particular responses after visual or auditory prompting by the computer program. The keyboard 105 allows an instructor to enter alpha numeric information about the subject into the computer 102. Although a number of different computer platforms are applicable to the present invention, embodiments of the present invention execute on either IBM compatible computers or Macintosh computers, or similarly configured computing devices such as set top boxes, PDA's, gaming consoles, etc.

Now referring to Figure 2, a computer network 200 is shown. The computer network 200 contains computers 202, 204, similar to that described above with reference to Figure 1, connected to a server 206. The connection between the computers 202, 204 and the server 206 can be made via a local area network (LAN), a wide area network (WAN), or via modem connections, directly or through the Internet. A printer 208 is shown connected to the computer 202 to illustrate that a subject can print out reports associated with the computer program of the present invention. The computer network 200 allows information such as test scores, game statistics, and other subject information to flow from a subject's computer 202, 204 to a server 206. An administrator can then review the information and can then download configuration and control information pertaining to a particular subject, back to the subject's computer 202, 204.

Before providing a detailed description of the present invention, a brief overview of certain components of speech will be provided, along with an explanation of how these components are processed by subjects. Following the overview, general information on speech processing will be provided so that the reader will better appreciate the novel aspects of the present invention.

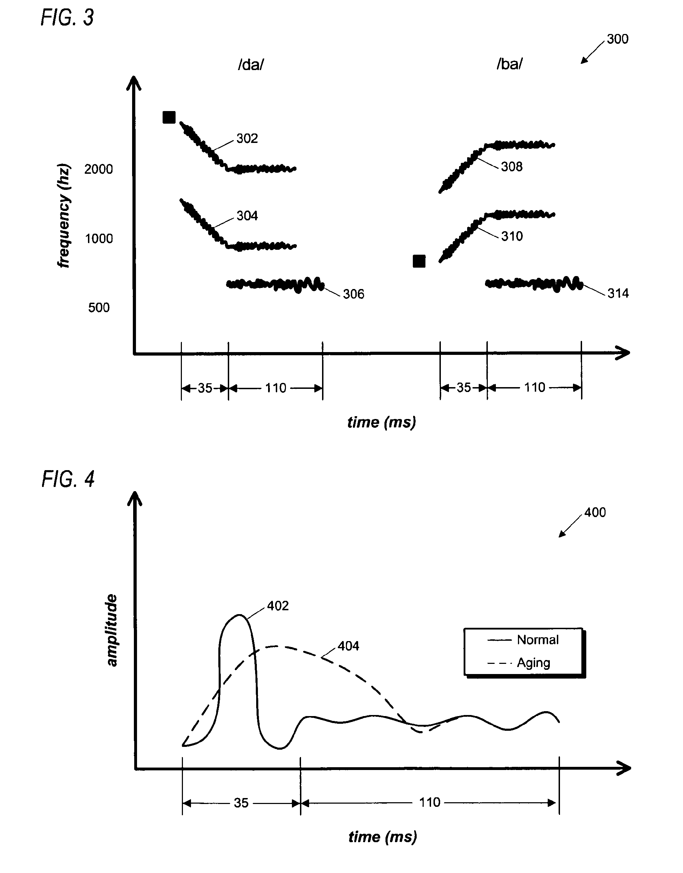

Referring to Figure 3, a chart is shown that illustrates frequency components, over time, for two distinct phonemes within the English language. Although different phoneme combinations are applicable to illustrate features of the present invention, the phonemes /da/ and /ba/ are shown. For the phoneme /da/, a downward sweep frequency component 302 (called a formant), at approximately 2.5 - 2 khz is shown to occur over a 35ms interval. In addition, a downward sweep frequency component (formant) 304, at approximately 1khz is shown to occur during the same 35ms interval. At the end of the 35ms interval, a constant frequency component (formant) 306 is shown, whose duration is approximately 110ms. Thus, in producing the phoneme /da/, the stop consonant portion of the element /d/ is generated, having high frequency sweeps of short duration, followed by a long vowel element /a/ of constant frequency.

Also shown are formants for a phoneme /ba/. This phoneme contains an upward sweep frequency component 308, at approximately 2khz, having a duration of approximately 35ms. The phoneme also contains an upward sweep frequency component 310, at approximately 1khz, during the same 35ms period. Following the stop consonant portion /b/ of the phoneme, is a constant frequency vowel portion 314 whose duration is approximately 110ms.

Thus, both the /ba/ and /da/ phonemes begin with stop consonants having modulated frequency components of relatively short duration, followed by a constant frequency vowel component of longer duration. The distinction between the phonemes exists primarily in the 2khz sweeps during the initial 35ms interval. Similarity exists between other stop consonants such as /ta/, /pa/, /ka/ and /ga/.

Referring now to Figure 4, the amplitude of a phoneme, for example /ba/, is viewed in the time domain. A short duration high amplitude peak waveform 402 is created upon release of either the lips or the tongue when speaking the consonant portion of the phoneme, that rapidly declines to a constant amplitude signal of longer duration. For an individual with normal temporal processing, the waveform 402 will be understood and processed essentially as it is. However, for an individual whose auditory processing is impaired, or who has abnormal temporal processing, the short duration, higher frequency consonant burst will be integrated over time with the lower frequency vowel, and depending on the degree of impairment, will be heard as the waveform 404. The result is that the information contained in the higher frequency sweeps associated with consonant differences, will be muddled, or indistinguishable.

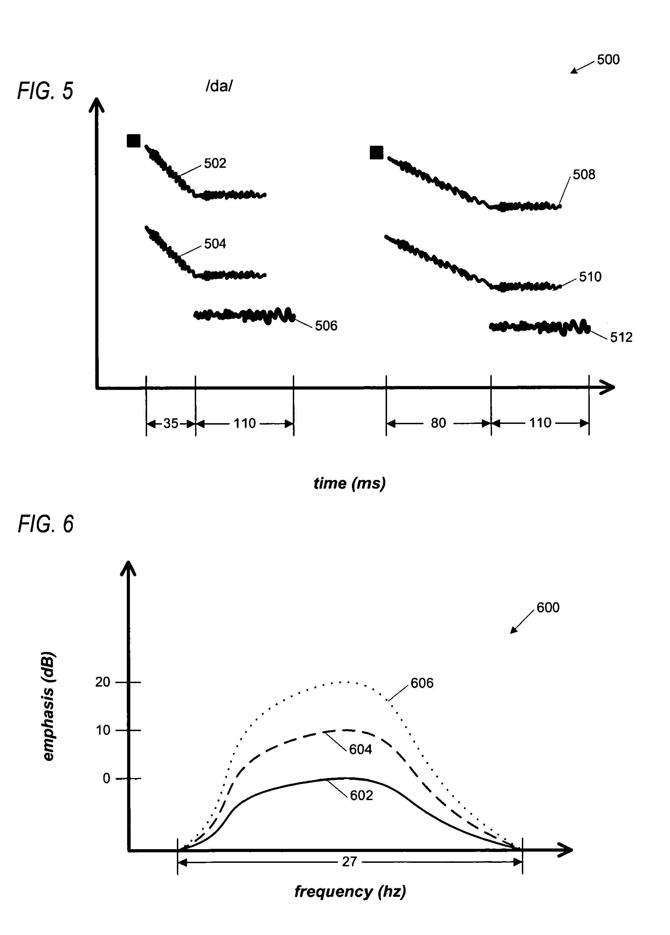

With the above general background of speech elements, and how subjects process them, a general overview of speech processing will now be provided. As mentioned above, one problem that exists in subjects is the inability to distinguish between short duration acoustic events. If the duration of these acoustic events are stretched, in the time domain, it is possible to train subjects to distinguish between these acoustic events. An example of such time domain stretching is shown in Figure 5, to which attention is now directed.

In Figure 5, a frequency vs. time graph 500 is shown similar to that described above with respect to Figure 3. Using existing computer technology, the analog waveforms 502, 504 can be sampled and converted into digital values (using a Fast Fourier Transform, for example). The values can then be manipulated so as to stretch the waveforms in the time domain to a predetermined length, while preserving the amplitude and frequency components of the modified waveforms. The modified waveform can then be converted back into an analog waveform (using an inverse FFT) for reproduction by a computer, or by some other audio device. The waveforms 502, 504 are shown stretched in the time domain to durations of 80ms (waveforms 508, 510). By stretching the consonant portion of the waveforms 502, 504 without effecting their frequency components, aging subjects with deteriorated acoustic processing can begin to hear distinctions in common phonemes.

Another method that may be used to help subjects distinguish between phonemes is to emphasize selected frequency envelopes within a phoneme. Referring to Figure 6, a graph 600 is shown illustrating a filtering function 602 that is used to filter the amplitude spectrum of a speech sound. In one embodiment, the filtering function effects an envelope that is 27 Hz wide. By emphasizing frequency modulated envelopes over a range similar to frequency variations in the consonant portion of phonemes, they are made to more strongly engage the brain. A 10 dB emphasis of the filtering function 602 is shown in waveform 604, and a 20 dB emphasis in the waveform 606.

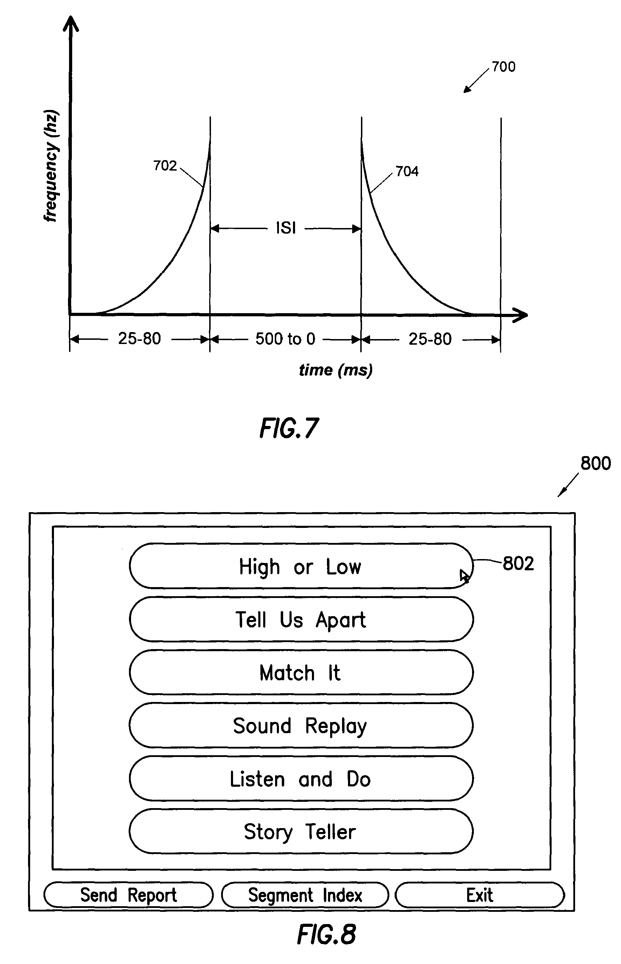

A third method that may be used to train subjects to distinguish short duration acoustic events is to provide frequency sweeps of varying duration, separated by a predetermined interval, as shown in Figure 7. More specifically, an upward frequency sweep 702, and a downward frequency sweep 704 are shown, having duration's varying between 25 and 80 milliseconds, and separated by an inter-stimulus interval (ISI) of between 500 and 0 milliseconds. The duration and frequency of the sweeps, and the inter-stimulus interval between the sweeps are varied depending on the processing level of the subject, as will be further described below.

Although a number of methodologies may be used to produce the stretching and emphasis of phonemes, of processing speech to stretch or emphasize certain portions of the speech, and to produce sweeps and bursts, according to one embodiment of the present invention, a complete description of the methodology used within HiFi is described in Appendix G, which should be read as being incorporated into the body of this specification.

Appendices H, I and J have further been included, and are hereby incorporated by reference to further describe the code which generates the sweeps, the methodology used for incrementing points in each of the exercises, and the stories used in the exercise Story Teller.

Each of the above described methods have been combined in a unique fashion by the present invention to provide an adaptive training method and apparatus for enhancing memory and cognition in aging adults. The present invention is embodied into a computer program entitled HiFi by Neuroscience Solutions, Inc. The computer program is provided to a participant via a CD-ROM which is input into a general purpose computer such as that described above with reference to Figure 1. Specifics of the present invention will now be described with reference to Figures 8-32.

Referring to Figure 8, an initial screen shot 800 is shown which provides buttons 802 for selection of one of the six exercises provided within the HiFi computer program. It is anticipated that more exercises may be added within the HiFi program, or alternate programs used to supplement or replace the exercises identified in the screen shot 800. In one embodiment, a participant begins training by selecting the first exercise (High or Low) and progressing sequentially through the exercises. That is, the participant moves a cursor over one of the exercise buttons, which causes a button to be highlighted, and then indicates a selection by pressing a computer mouse, for example. In an alternate embodiment, the exercises available for training are pre-selected, based on the participant's training history, and are available in a prescribed order. That is, based on the participant's success or failure in previous training sessions, or the time a participant has spent in particular exercises, an optimized schedule for a particular day is determined and provided to the participant via the selection screen. For example, to allow some adaptation of a training regimen to a participant's schedule, an hour per day is prescribed for N number of weeks (e.g., 8 weeks). This would allow 3-4 exercises to be presented each day. In another model, an hour and a half per day might be prescribed for a number of weeks, which would allow either more time for training in each exercise, each day, or more than 3-4 exercises to be presented each day. In either case, it should be appreciated that a training regiment for each exercise should be adaptable according to the participant's schedule, as well as to the participant's historical performance in each of the exercises. Once the participant has made a selection, in this example, the exercise HIGH or LOW is selected, training proceeds to that exercise.

### HIGH OR LOW

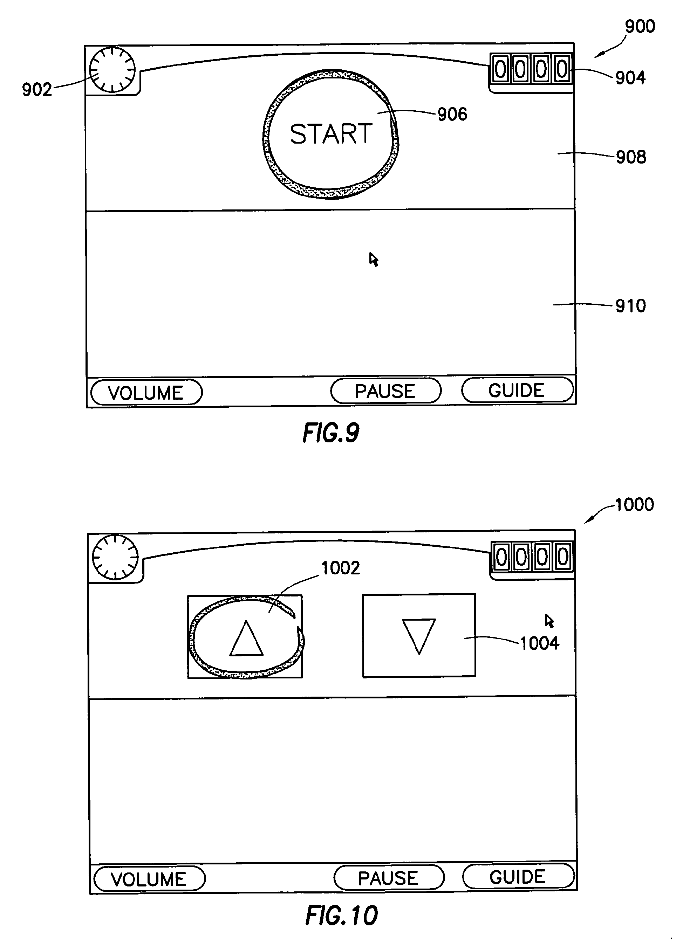

Referring now to Figure 9, a screen shot is shown of the initial training screen for the exercise HIGH or LOW. Elements within the training screen 900 will be described in detail, as many are common for all of the exercises within the HiFi program. In the upper left of the screen 900 is a clock 902. The clock 902 does not provide an absolute reference of time. Rather, it provides a relative progress indicator according to the time prescribed for training in a particular game. For example, if the prescribed time for training was 12 minutes, each tick on the clock 902 would be 1 minute. But, if the prescribed time for training was 20 minutes, then each tick on the clock would be 20/12 minutes. In the following figures, the reader will note how time advances on the clock 902 in consecutive screens. Also shown is a score indicator 904. The score indicator 904 increments according to correct responses by the participant. In one embodiment, the score does not increment linearly. Rather, as described in co-pending application U.S. Serial No. 10/894,388, filed July 19, 2004 and entitled "REWARDS METHOD FOR IMPROVED NEUROLOGICAL TRAINING", the score indicator 904 may increment non-linearly, with occasional surprise increments to create additional rewards for the participant. But, regardless of how the score is incremented, the score indicator provides the participant an indication of advancement in their exercise. The screen 900 further includes a start button 906 (occasionally referred to in the Appendices as the OR button). The purpose of the start button 906 is to allow the participant to select when they wish to begin a new trial. That is, when the participant places the cursor over the start button 906, the button is highlighted. Then, when the participant indicates a selection of the start button 906 (e.g., by click the mouse), a new trial is begun. The screen 900 further includes a trial screen portion 908 and a graphical reward portion 910. The trial screen portion 908 provides an area on the participant's computer where trials are graphically presented. The graphical reward portion 910 is provided, somewhat as a progress indicator, as well as a reward mechanism, to cause the participant to wish to advance in the exercise, as well as to entertain the participant. The format used within the graphical reward portion 910 is considered novel by the inventors, and will be better described as well as shown, in the descriptions of each of the exercises.

Referring now to Figure 10, a screen shot 1000 is shown of an initial trial within the exercise HIGH or LOW. The screen shot 1000 is shown after the participant selects the start button 906. Elements of the screen 1000 described above with respect to Figure 9 will not be referred to again, but it should be appreciated that unless otherwise indicated, their function performs as described above with respect to Figure 9. Additionally, two blocks 1002 and 1004 are presented to the participant. The left block 1002 shows an up arrow. The right block 1004 shows a down arrow. The blocks 1002, 1004 are intended to represent auditory frequency sweeps that sweep up or down in frequency, respectively. Within the context of this application, the blocks 1002, 1004 are referred to as icons. In one embodiment, icons are pictorial representations that are selectable by the participant to indicate a selection. Icons may graphically illustrate an association with an aural presentation, such as an up arrow 1002, or may indicate a phoneme (e.g., BA), or even a word. Further, icons may be used to indicate correct selections to trials, or incorrect selections. Any use of a graphical item within the context of the present exercises, other than those described above with respect to Figure 9 may be referred to as icons. In some instances, the term grapheme may also be used, although applicant's believe that icon is more representative of selectable graphical items.

In one embodiment, the participant is presented with two or more frequency sweeps, each separated by an inter-stimulus-interval (ISI). For example, the sequence of frequency sweeps might be (UP, DOWN, UP). The participant is required, after the frequency sweeps are auditorily presented, to indicate the order of the sweeps by selecting the blocks 1002, 1004, according to the sweeps. Thus, if the sequence presented was UP, DOWN, UP, the participant would be expected to indicate the sequence order by selecting the left block 1002, then right block 1004, then left block 1002. If the participant correctly indicates the sweep order, as just defined, then they have correctly responded to the trial, the score indicator increments, and a "ding" is played to indicate a correct response. If the participant incorrectly indicates the sweep order, then they have incorrectly responded to the trial, and a "thunk" is played to indicate an incorrect response. With the above understanding of training with respect to the exercise HIGH or LOW, specifics of the game will now be described.

A goal of this exercise is to expose the auditory system to rapidly presented successive stimuli during a behavior in which the participant must extract meaningful stimulus data from a sequence of stimulus. This can be done efficiently using time order judgment tasks and sequence reconstruction tasks, in which participants must identify each successively present auditory stimulus. Several types of simple, speech-like stimuli are used in this exercise to improve the underlying ability of the brain to process rapid speech stimuli: frequency modulated (FM) sweeps, structured noise bursts, and phoneme pairs such as /ba/ and /da/. These stimuli are used because they resemble certain classes of speech. Sweeps resemble stop consonants like /b/ or /d/. Structured noise bursts are based on fricatives like /sh/ or /f/, and vowels like /a/ or /i/. In general, the FM sweep tasks are the most important for renormalizing the auditory responses of participants. The structured noise burst tasks are provided to allow high-performing participants who complete the FM sweep tasks quickly an additional level of useful stimuli to continue to engage them in time order judgment and sequence reconstruction tasks.

This exercise is divided into two main sections, FM sweeps and structured noise bursts. Both of these sections have: a Main Task, an initiation for the Main Task, a Bonus Task, and a short initiation for the Bonus Task. The Main Task in FM sweeps is Task 1 (Sweep Time Order Judgment), and the Bonus Task is Task 2 (Sweep Sequence Reconstruction). FM Sweeps is the first section presented to the participant. Task 1 of this section is closed out before the participant begins the second section of this exercise, structured noise bursts. The Main Task in structured noise bursts is Task 3 (Structured Noise Burst Time Order Judgment), and the Bonus Task is Task 4 (Structured Noise Burst Sequence Reconstruction). When Task 3 is closed out, the entire Task is reopened beginning with easiest durations in each frequency. The entire Task is replayed.

### Task 1 - Main Task: Sweep Time Order Judgment

This is a time order judgment task. Participants listen to a sequential pair of FM sweeps, each of which can sweep upwards or downwards. Participants are required to identify each sweep as upwards or downwards in the correct order. The task is made more difficult by changing both the duration of the FM sweeps (shorter sweeps are more difficult) and decreasing the inter-stimulus interval (ISI) between the FM sweeps (shorter ISIs are more difficult).

Stimuli consist of upwards and downwards FM sweeps, characterized by their base frequency (the lowest frequency in the FM sweep) and their duration. The other characteristic defining an FM sweep, the sweep rate, is held constant at 16 octaves per second throughout the task. This rate was chosen to match the average FM sweep rate of formants in speech (e.g., ba/da). A pair of FM sweeps is presented during a trial. The ISI changes based on the participant's performance. There are three base frequencies:

| Base Frequency Index | Base Frequency |
|---|---|
| 1 | 500 Hz |
| 2 | 1000 Hz |
| 3 | 2000 Hz |

There are five durations:

| Duration Index | Duration |
|---|---|
| 1 | 80ms |
| 2 | 60ms |
| 3 | 40ms |
| 4 | 35ms |
| 5 | 30ms |

Initially, a "training" session is provided to illustrate to the participant how the exercise is to be played. More specifically, an upward sweep is presented to the participant, followed by an indication, as shown in Figure 10 of block 1002 circled in red, to indicate to the participant that they are to select the upward arrow block 1002 when they hear an upward sweep. Then, a downward sweep is presented to the participant, followed by an indication (not shown) of block 1004 circled in red, to indicate to the participant that they are to select the downward arrow block 1004 when they hear a downward sweep. The initial training continues by presenting the participant with an upward sweep, followed by a downward sweep, with red circles appearing first on block 1002, and then on block 1004. The participant is presented with several trials to insure that they understand how trials are to be responded to. Once the initial training completes, it is not repeated. That is, the participant will no longer be presented with hints (i.e., red circles) to indicate the correct selection. Rather, after selecting the start button, an auditory sequence of frequency sweeps is presented, and the participant must indicate the order of the frequency sweeps by selecting the appropriate blocks, according to the sequence.

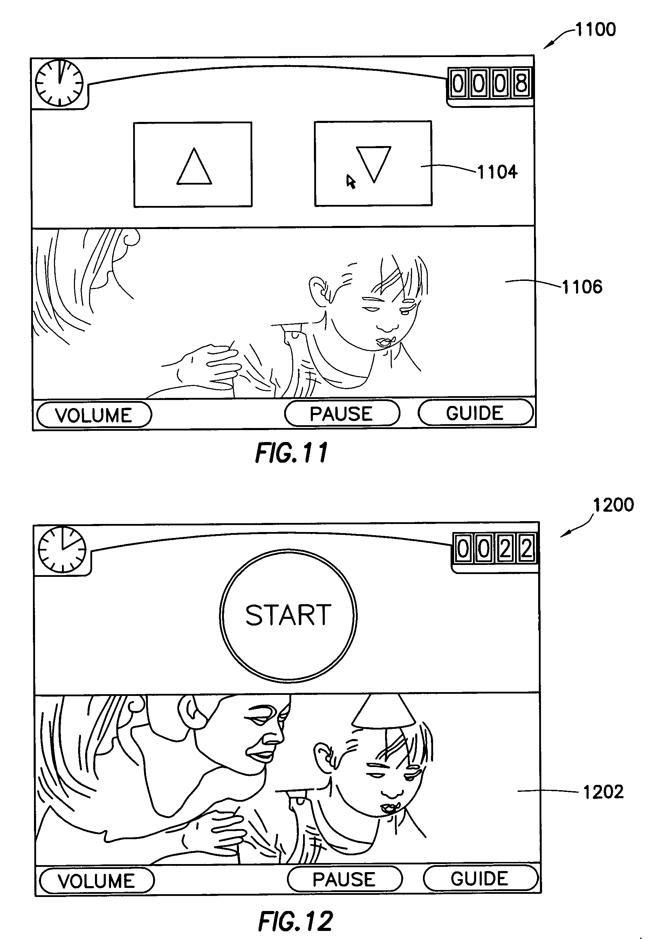

Referring now to Figure 11, a screen shot 1100 is provided to illustrate a trial. In this instance, the right block 1104 is being selected by the participant to indicate a downward sweep. If the participant correctly indicates the sweep order, the score indicator is incremented, and a "ding" is played, as above. In addition, within the graphical reward portion 1106 of the screen 1100, part of an image is traced out for the subject. That is, upon completion of a trial, a portion of a reward image is traced. After another trial, an additional portion of a reward image is traced. Then, after several trials, the complete image is completed and shown to the participant. Thus, upon initiation of a first trial, the graphical reward portion 1106 is blank. But, as each trial is completed, a portion of a reward image is presented, and after a number of trials, the image is completed. One skilled in the art will appreciate that the number of trials required to completely trace an image may vary. What is important is that in addition to incrementing a counter to illustrate correct responses, the participant is presented with a picture that progressively advances as they complete trials, whether or not the participant correctly responds to a trial, until they are rewarded with a complete image. It is believed that this progressive revealing of reward images both entertains and holds the interest of the participant. And, it acts as an encouraging reward for completing a number of trials, even if the participant's score is not incrementing. Further, in one embodiment, the types of images presented to the participant are selected based on the demographics of the participant. For example, types of reward image libraries include children, nature, travel, etc., and can be modified according to the demographics, or other interests of the subject being trained. Applicant's are unaware of any "reward" methodology that is similar to what is shown and described with respect to the graphical reward portion.

Referring to Figure 12, a screen shot 1200 is shown within the exercise HIGH or LOW. The screen shot 1200 includes a completed reward image 1202 in the graphical reward portion of the screen. In one embodiment, the reward image 1202 required the participant to complete six trials. But, one skilled in the art will appreciate that any number of trials might be selected before the reward image is completed. Once the reward image 1202 is completed, the next trial will begin with a blank graphical reward portion.

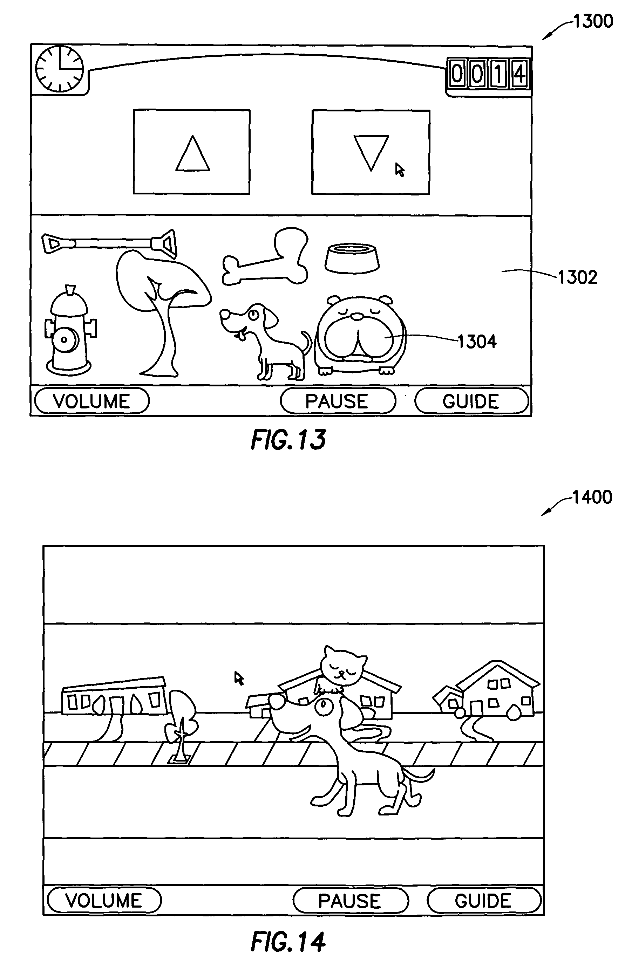

Referring to Figure 13, a screen shot 1300 is shown within the exercise HIGH or LOW. In this screen 1300 the graphical reward portion 1302 is populated with a number of figures such as the dog 1304. In one embodiment, a different figure is added upon completion of each trial. Further, in one embodiment, each of the figures relate to a common theme, for a reward animation that will be forthcoming. More specifically at intervals during training, when the participant has completed a number of trials, a reward animation is played to entertain the participant, and provide a reward to training. The figures shown in the graphical reward portion 1302 correspond to a reward animation that has yet to be presented.

Referring now to Figure 14, a reward animation 1400, such as that just described is shown. Typically, the reward animation is a moving cartoon, with music in the background, utilizing the figures added to the graphical reward portion at the end of each trial, as described above.

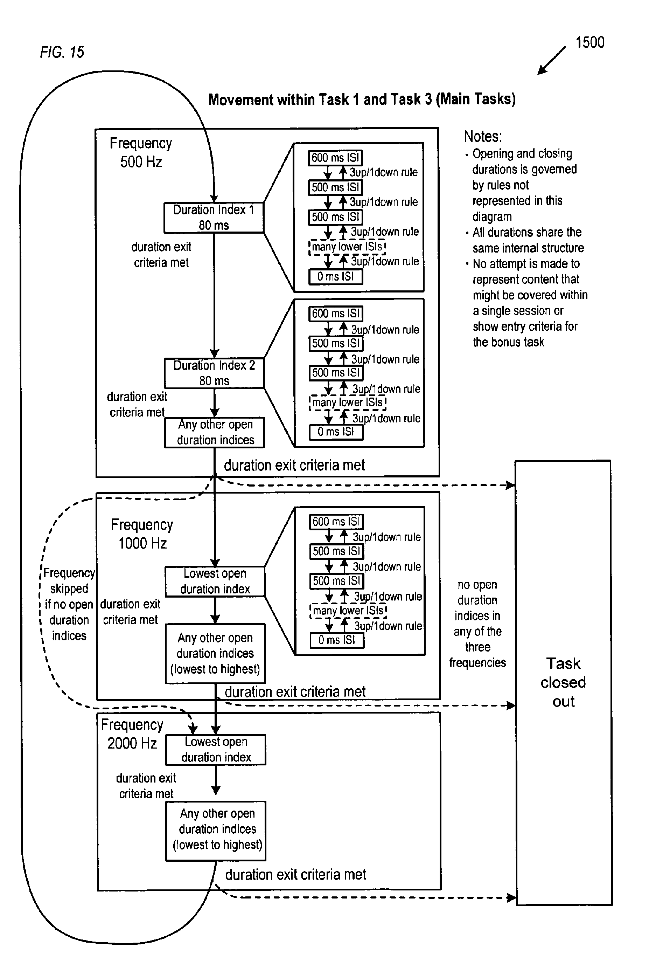

Referring now to Figure 15, a flow chart is shown which illustrates progression thru the exercise HIGH or LOW. The first time in Task 1, a list of available durations (categories) with a current ISI is created within each frequency. At this time, there are categories in this list that have a duration index of 1 and a current ISI of 600 ms. Other categories (durations) are added (opened) as the participant progresses through the Task. Categories (durations) are removed from the list (closed) when specific criteria are met.

Choosing a frequency, duration (category), and ISI: *The first time in:* the participant begins by opening duration index 1 (80 ms) in frequency index 1 (500 Hz). The starting ISI is 600 ms when opening a duration and the ISI step size index when entering a duration is 1.

Beginning subsequent sessions: The participant moves to a new frequency unless the participant has completed less than 20 trials in Task 1 of the previous session's frequency.

Returning from Task 2 (bonus task): The participant will be switching durations, but generally staying in the same frequency.

Switching frequencies: The frequency index is incremented, cycling the participant through the frequencies in order by frequency index (500 Hz, 1000 Hz, 200 Hz, 500 Hz, etc.). If there are no open durations in the new frequency, the frequency index is incremented again until a frequency is found that has an open duration. If all durations in all frequencies have been closed out, Task 1 is closed. The participant begins with the longest open duration (lowest duration index) in the new frequency.

Switching durations: Generally, the duration index is incremented until an open duration is found (the participant moves from longer, easier durations to shorter, harder durations). If there are no open durations, the frequency is closed and the participant switches frequencies. A participant switches into a duration with a lower index (longer, easier duration) when 10 incorrect trials are performed at an ISI of 1000 ms at a duration index greater than 1.
Progression within a duration changes in ISI: ISIs are changed using a 3-up/1-down adaptive tracking rule: Three consecutive correct trials equals advancement - ISI is shortened. One incorrect equals retreat - ISI is lengthened. The amount that the ISI changes is adaptively tracked. This allows participants to move in larger steps when they begin the duration and then smaller steps as they approach their threshold. The following steps sizes are used:

| | |
|---|---|
| ISI Step Size Index | ISI Step Size |
| 1 | 50ms |
| 2 | 25ms |
| 3 | 10ms |
| 4 | 5ms |

When starting a duration, the ISI step index is 1 (50 ms). This means that 3 consecutive correct trials will shorten the ISI by 50 ms and 1 incorrect will lengthen the ISI by 50 ms - 3up/1down. The step size index is increased after every second Sweeps reversal. A Sweeps reversal is a "change in direction". For example, three correct consecutive trials shortens the ISI. A single incorrect lengthens the ISI. The drop to a longer ISI after the advancement to a shorter ISI is counted as one reversal. If the participant continues to decrease difficulty, these drops do not count as reversals. A "change in direction" due to 3 consecutive correct responses counts as a second reversal.
A total of 8 reversals are allowed within a duration; the 9^{th} reversal results in the participant exiting the duration; the duration remains open unless criteria for stable performance have been met. ISI never decreases to lower than 0 ms, and never increases to more than 1000 ms. The tracking toggle pops the participant out of the Main Task and into Task Initiation if there are 5 sequential increases in ISI. The current ISI is stored. When the participant passes initiation, they are brought back into the Main Task. Duration re-entry rules apply. A complete description of progress through the exercise High or Low is found in Appendix A.

To allow the text of this specification to be presented clearly, the details relating to progression methodology, processing, stimuli, etc., for each of the exercises within HiFi have been placed in Appendices to this specification. However, applicants consider the appendices to be part of this specification. Therefore, they should be read as part of this specification, and as being incorporated within the body of this specification for all purposes.

### Stretch and Emphasis Processing of Natural Speech in HiFi

In order to improve the representational fidelity of auditory sensory representations in the brain of trained individuals, natural speech signals are initially stretched and emphasized. The degree of stretch and emphasis is reduced as progress is made through the exercise. In the final stage, faster than normal speech is presented with no emphasis.

Both stretching and emphasis operations are performed using the Praat (v. 4.2) software package (http://www.fon.hum.uva.nl/praat/) produced by Paul Boersma and David Weenink at the Institute for Phonetic Sciences at the University of Amsterdam. The stretching algorithm is a Pitch-Synchronous OverLap-and-Add method (PSOLA). The purpose of this algorithm is lengthen or shorten the speech signal over time while maintaining the characteristics of the various frequency components, thus retaining the same speech information, only in a time-altered form. The major advantage of the PSOLA algorithm over the phase vocoder technique used in previous versions of the training software is that PSOLA maintains the characteristic pitch-pulse-phase synchronous temporal structure of voiced speech sounds. An artifact of vocoder techniques is that they do not maintain this synchrony, creating relative phase distortions in the various frequency components of the speech signal. This artifact is potentially detrimental to older observers whose auditory systems suffer from a loss of phase-locking activity. A minimum frequency of 75 Hz is used for the periodicity analysis. The maximum frequency used is 600 Hz. Stretch factors of 1.5, 1.25, 1 and 0.75 are used.

The emphasis operation used is referred to as band-modulation deepening. In this emphasis operation, relatively fast-changing events in the speech profile are selectively enhanced. The operation works by filtering the intensity modulations in each critical band of the speech signal. Intensity modulations that occur within the emphasis filter band are deepened, while modulations outside that band are not changed. The maximum enhancement in each band is 20 dB. The critical bands span from 300 to 8000 Hz. Bands are 1 Bark wide. Band smoothing (overlap of adjacent bands) is utilized to minimize ringing effects. Band overlaps of 100 Hz are used. The intensity modulations within each band are calculated from the pass-band filtered sound obtained from the inverse Fourier transform of the critical band signal. The time-varying intensity of this signal is computed and intensity modulations between 3 and 30 Hz are enhanced in each band. Finally, a full-spectrum speech signal is recomposed from the enhanced critical band signals. The major advantage of the method used here over methods used in previous versions of the software is that the filter functions used in the intensity modulation enhancement are derived from relatively flat Gaussian functions. These Gaussian filter functions have significant advantages over the FIR filters designed to approximate rectangular-wave functions used previously. Such FIR functions create significant ringing in the time domain due to their steepness on the frequency axis and create several maxima and minima in the impulse response. These artifacts are avoided in the current methodology.

The following levels of stretching and emphasis are used in HiFi:
Level 1 = 1.5 stretch, 20 dB emphasis
Level 2 = 1.25 stretch, 20 dB emphasis
Level 3 = 1.00 stretch, 10 dB emphasis
Level 4 = 0.75 stretch, 10 dB emphasis
Level 5 = 0.75 stretch, 0 dB emphasis

### TELL US APART

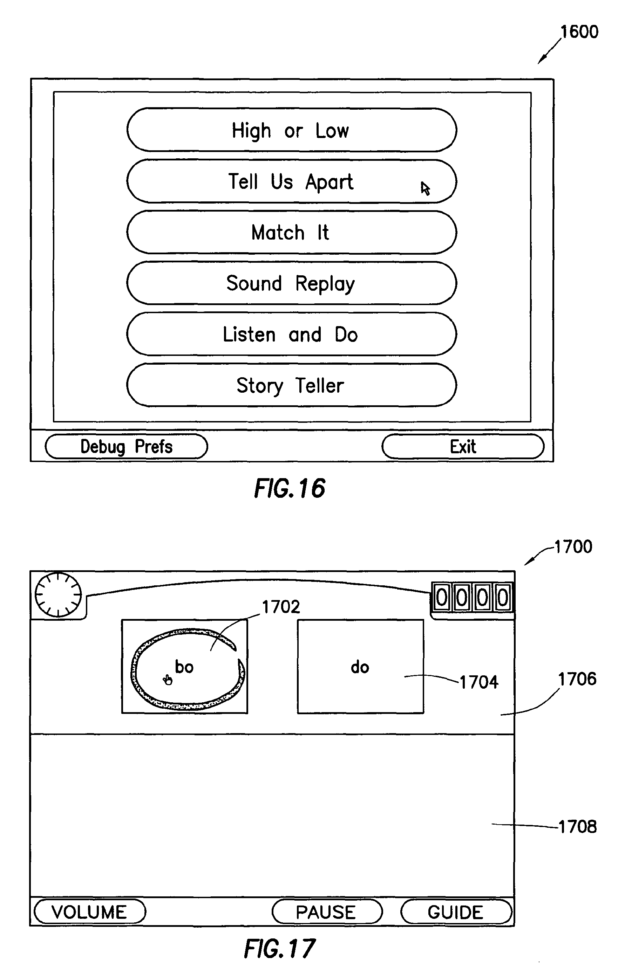

Referring now to Figure 16, a screen shot is shown of an exercise selection screen 1600. In this instance, the exercise Tell us Apart is being selected. Upon selection, the participant is taken to the exercise. In one embodiment, the participant is returned to the exercise selection screen 1600 when time expires in a current exercise. In an alternative embodiment, the participant is taken immediately to the next prescribed exercise, without returning to the selection screen 1600.

Applicants believe that auditory systems in older adults suffer from a degraded ability to respond effectively to rapidly presented successive stimuli. This deficit manifests itself psychophysically in the participant's poor ability to perform auditory stimulus discriminations under backward and forward masking conditions. This manifests behaviorally in the participant's poor ability to discriminate both the identity of consonants followed by vowels, and vowels preceded by consonants. The goal of Tell us Apart is to force the participant to make consonant and vowel discriminations under conditions of forward and backward masking from adjacent vowels and consonants respectively. This is accomplished using sequential phoneme identification tasks and continuous performance phoneme identification tasks, in which participants identify successively presented phonemes. Applicants assume that older adults will find making these discriminations difficult, given their neurological deficits. These discriminations are made artificially easy (at first) by using synthetically generated phonemes in which both 1) the relative loudness of the consonants and vowels and/or 2) the gap between the consonants and vowels has been systematically manipulated to increase stimulus discriminability. As the participant improves, these discriminations are made progressively more difficult by making the stimuli more normal.

Referring now to Figure 17, a screen shot 1700 is shown of an initial training screen within the exercise Tell us Apart. As in the exercise High or Low, the screen 1700 includes a timer, a score indicator, a trial portion, and a graphical reward portion. After the participant selects the Start button, two phonemes, or words, are graphically presented, (1702 and 1704 respectively). Then, one of the two words is presented in an acoustically processed form as described above. The participant is required to select one of the two graphically presented words 1702, 1704 to pair with the acoustically processed word. The selection is made when the participant places the cursor over one of the two graphical words, and indicates a selection (e.g., by clicking on a mouse button). If the participant makes a correct selection, the score indicator increments, and a "ding" is played. If the participant makes an incorrect selection, a "thunk" is played.

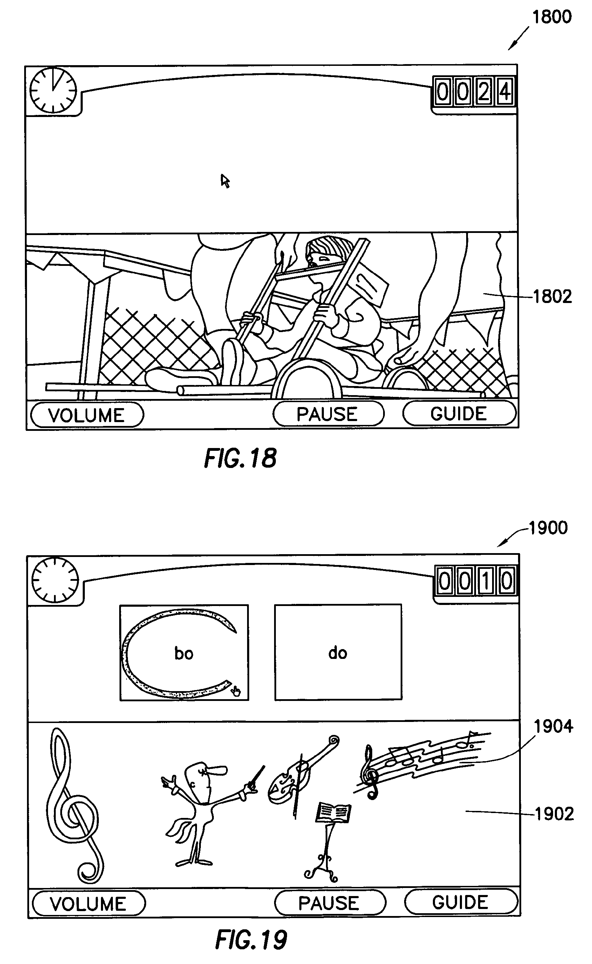

Referring to Figure 18, a screen shot 1800 is shown, particularly illustrating a graphical reward portion 1802 that is traced, in part, upon completion of a trial. And, over a number of trials, the graphical reward portion is completed in trace form, finally resolving into a completed picture.

Referring to Figure 19, a screen shot 1900 is shown, particularly illustrating a graphical reward portion 1902 that places a figure 1904 into the graphical reward portion 1902 upon completion of each trial. After a given number of trials, a reward animation is presented, as in the exercise High or Low, utilizing the figures 1904 presented over the course of a number of trials. A complete description of advancement through the exercise Tell us Apart, including a description of the various processing levels used within the exercise is provided in Appendix B.

### MATCH IT

Goals of the exercise Match It! include: 1) exposing the auditory system to substantial numbers of consonant-vowel-consonant syllables that have been processed to emphasize and stretch rapid frequency transitions; and 2) driving improvements in working memory by requiring participants to store and use such syllable information in auditory working memory. This is done by using a spatial match task similar to the game "Concentration", in which participants must remember the auditory information over short periods of time to identify matching syllables across a spatial grid of syllables.

Match It! has only one Task, but utilizes 5 speech processing levels. Processing level 1 is the most processed and processing level 5 is normal speech. Participants move through stages within a processing level before moving to a less processed speech level. Stages are characterized by the size of the spatial grid. At each stage, participants complete all the categories. The task is a spatial paired match task. Participants see an array of response buttons. Each response button is associated with a specific syllable (e.g., "big", "tag"), and each syllable is associated with a pair of response buttons. Upon pressing a button, the participant hears the syllable associated with that response button. If the participant presses two response buttons associated with identical syllables consecutively, those response buttons are removed from the game. The participant completes a trial when they have removed all response buttons from the game. Generally, a participant completes the task by clicking on various response buttons to build a spatial map of which buttons are associated with which syllables, and concurrently begins to click consecutive pairs of responses that they believe, based on their evolving spatial map, are associated with identical syllables. The task is made more difficult by increasing the number of response buttons and manipulating the level of speech processing the syllables receive.

Stages: There are 4 task stages, each associated with a specific number of response buttons in the trial and a maximum number of response clicks allowed:

| Stage | Number of Response Buttons | Maximum Number of Clicks (max clicks) |
|---|---|---|
| 1 | 8 (4 pairs) | 20 |
| 2 | 16 (8 pairs) | 60 |
| 3 | 24 (12 pairs) | 120 |
| 4 | 30 (15 pairs) | 150 |

Categories: The stimuli consist of consonant-vowel-consonant syllables or single phonemes:

| Category 1 | Category 2 | Category 3 | Category 4 | Category 5 |
|---|---|---|---|---|
| baa | fig | big | buck | back |
| do | rib | bit | bud | bag |
| gi | sit | dig | but | bat |
| pu | kiss | dip | cup | cab |
| te | bill | kick | cut | cap |
| ka | dish | kid | duck | cat |
| laa | nut | kit | dug | gap |
| ro | chuck | pick | pug | pack |
| sa | rug | pig | pup | pat |
| stu | dust | pit | tub | tack |
| ze | pun | tick | tuck | tag |
| sho | gum | tip | tug | tap |
| chi | bash | bid | bug | gab |
| vaa | can | did | cud | gag |
| fo | gash | pip | puck | bad |
| ma | mat | gib | dud | tab |
| nu | lab | tig | gut | tad |
| the | nag | gig | guck | pad |

Category 1 consists of easily discriminable CV pairs. Leading consonants are chosen from those used in the exercise Tell us Apart and trailing vowels are chosen to make confusable leading consonants as easy to discriminate as possible. Category 2 consists of easily discriminable CVC syllables. Stop, fricative, and nasal consonants are used, and consonants and vowels are placed to minimize the number of confusable CVC pairs. Categories 3, 4, and 5 consist of difficult to discriminate CVC syllables. All consonants are stop consonants, and consonants and vowels are placed to maximize the number of confusable CVC syllables (e.g., cab/cap).

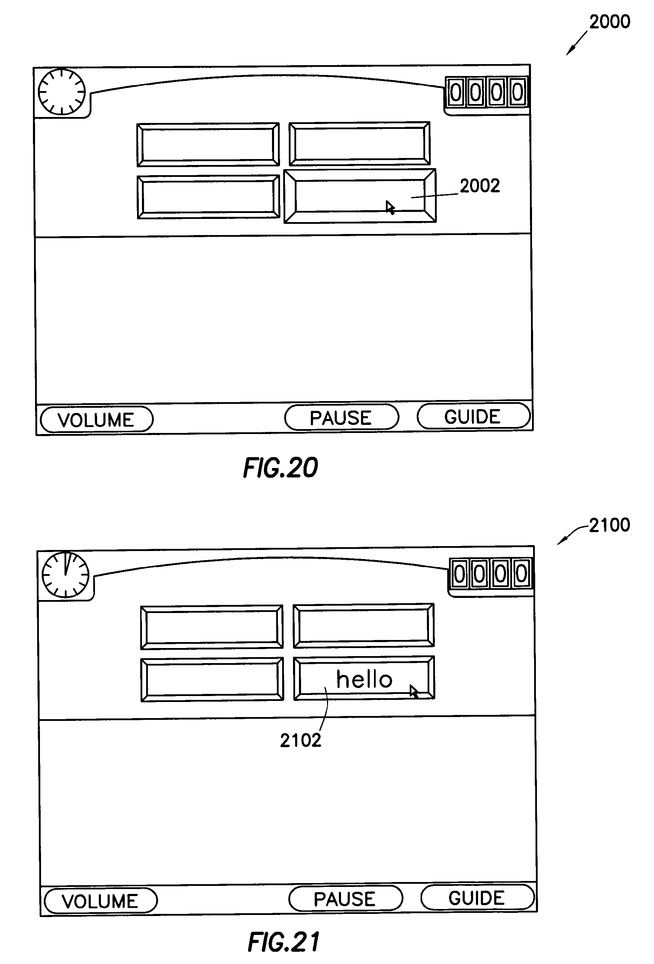

Referring now to Figure 20, a screen shot 2000 is shown of a trial within the exercise Match It! That is, after the participant selects the start button to begin a trial, they are presented initially with four buttons 2002 for selection. As they move the cursor over a button 2002, it is highlighted. When they select a button 2002, a stimuli is presented. Consecutive selection of two buttons 2002 that have the same stimuli results in the two buttons being removed from the grid.

Referring now to Figure 21, a screen shot 2100 is shown. This screen occurs during an initial training session after the participant has selected a button. During training, the word (or stimuli) associated with the selected button 2102 is presented both aurally and graphically to the participant. However, after training has ended, the stimuli is presented aurally only.

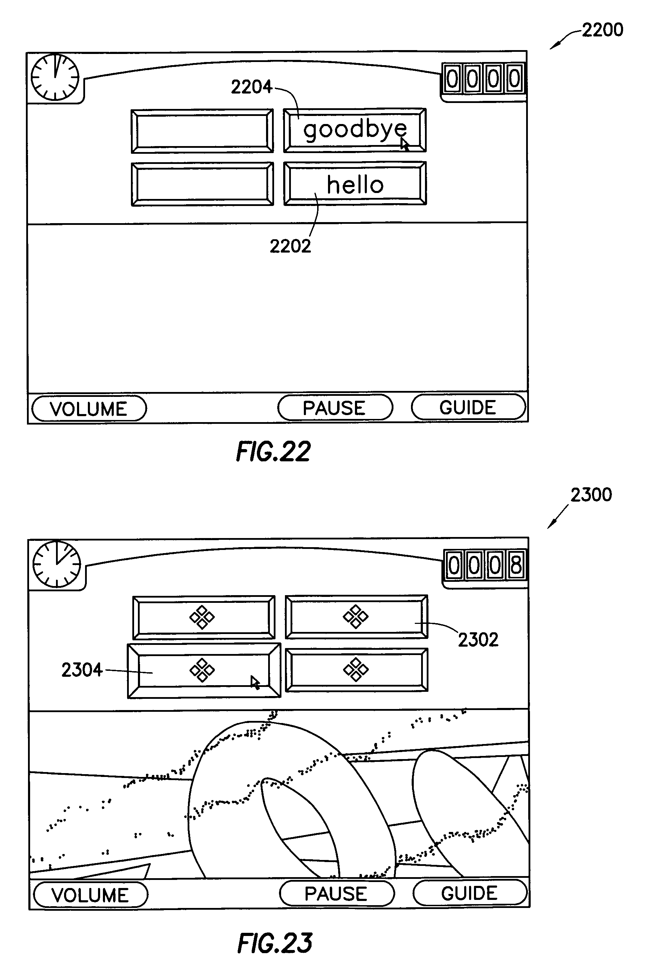

Referring now to Figure 22, a screen shot 2200 is shown. This shot particularly illustrates that button selections are made in pairs. That is, a first selection is made to button 2202, associated with the stimuli "hello". This selection is held until a selection is made to the second button 2204, associated with the stimuli "goodbye". Since the consecutively selected buttons 2202 and 2204 were not associated with the same stimuli, the buttons will remain on the grid, and will be covered to hide the stimuli.

Referring now to Figure 23, a screen shot 2300 is shown. This screen 2300 shows two consecutively selected buttons 2302 and 2304, as in Figure 2200. However, this screen 2300 particularly illustrates that the stimuli associated with these buttons 2302 and 2304 are presented aurally only, but not graphically.

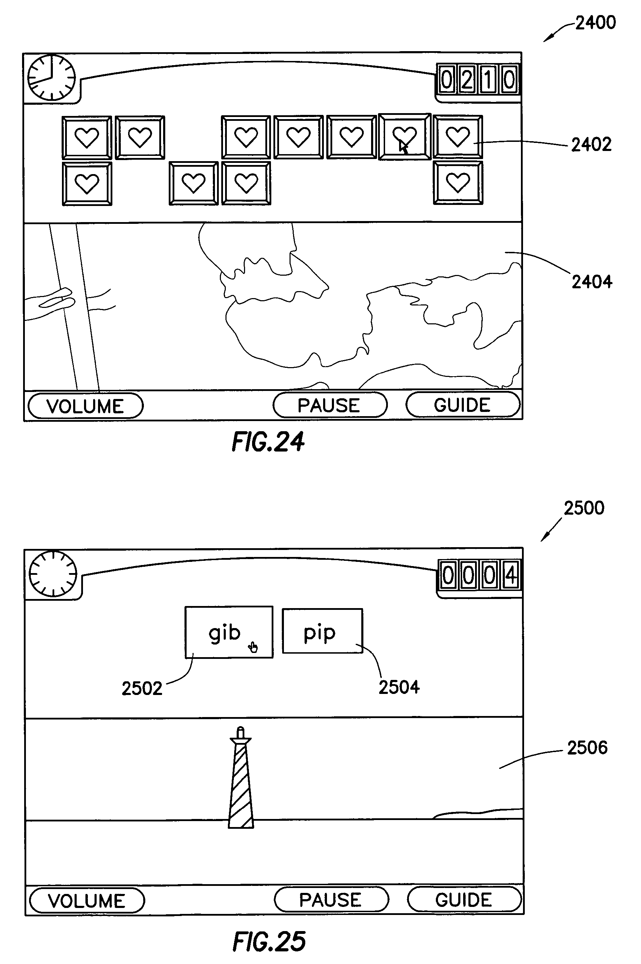

Referring now to Figure 24, a screen shot 2400 is shown. This screen 2400 particularly illustrates a 16 button 2402 grid, presented to the participant during a more advanced stage of training than shown above with respect to Figure's 20-23. Furthermore, what is shown is the beginning traces of a picture in the graphical reward portion 2404, as described above. One skilled in the art will appreciate that as the participant advances through the various levels in the exercise, the number of buttons provided to the participant also increases. For a complete description of flow through the processing levels, please see Appendix C.

### SOUND REPLAY

Applicants believe that the degraded representational fidelity of the auditory system in older adults causes an additional difficulty in the ability of older adults to store and use information in auditory working memory. This deficit manifests itself psychophysically in the participant's poor ability to perform working memory tasks using stimuli presented in the auditory modality. The goals of this exercise therefore include: 1) To expose the participant's auditory system to substantial numbers of consonant-vowel-consonant syllables that have been processed to emphasize and stretch the rapid frequency transitions; and 2) To drive improvements in working memory by requiring participants to store and use such syllable information in auditory working memory. These goals are met using a temporal match task similar to the neuropsychological tasks digit span and digit span backwards, in which participants must remember the auditory information over short periods of time to identify matching syllables in a temporal stream of syllables.

Sound Replay has a Main Task and Bonus Task. The stimuli are identical across the two Tasks in Sound Replay. In one embodiment, the stimuli used in Sound Replay is identical to that used in Match It. There are 5 speech processing levels. Processing level 1 is the most processed and processing level 5 is normal speech. Participants move through stages within a processing level before moving to a less processed speech level. At each stage, participants complete all categories.

A task is a temporal paired match trial. Participants hear a sequence of processed syllables (e.g., "big", "tag", "pat"). Following the presentation of the sequence, the participant sees a number of response buttons, each labeled with a syllable. All syllables in the sequence are shown, and there may be buttons labeled with syllables not present in the sequence (distracters). The participant is required to press the response buttons to reconstruct the sequence. The Task is made more difficult by increasing the length of the sequence, decreasing the ISI, and manipulating the level of speech processing the syllables receive. A complete description of the flow through the various stimuli and processing levels is found in Appendix D.

Referring now to Figure 25, a screen shot 2500 is shown which illustrates a trial within the exercise Sound Replay. More specifically, after the participant selects the start button, two or more processed stimuli are aurally presented, in a particular order. Subsequent to the aural presentation, two or more graphical representations 2502, 2504 of the stimuli are presented. In one embodiment, distracter icons may also be presented to make the task more difficult for the participant. The participant is required to select the icons 2502, 2504 in the order in which they were aurally presented. Thus, if the aural presentation were "gib", "pip", the participant should select icon 2502 followed by selection of icon 2504. If the participant correctly responds to the trial, a "ding" is played, and the score indicator increments. Then, the graphical award portion 2506 traces a portion of a picture, as above. If the participant does not indicate the correct sequence, a "thunk" is played, and the correct response is illustrated to the participant by highlighting the icons 2502, 2504 according to their order of aural presentation.

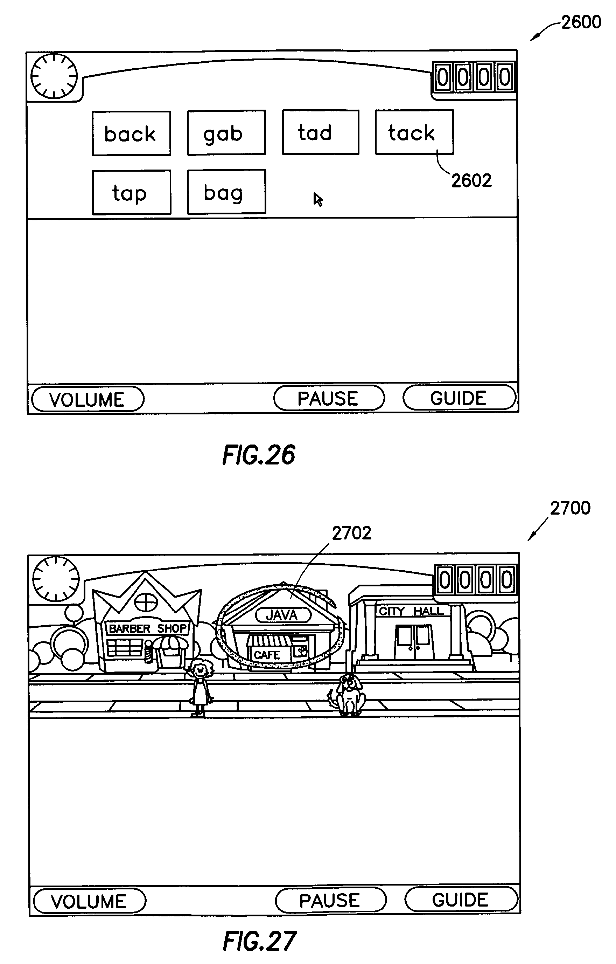

Referring now to Figure 26, a screen shot is shown of a more advanced level of training within the exercise Sound Replay. In this instance, six buttons 2602 are presented to the participant after aural presentation of a sequence. The participant is required to select the buttons 2602 according to the order presented in the aural sequence. As mentioned above, if they are incorrect in their selection of the buttons 2602, Sound Replay provides an onscreen illustration to show the correct order of selection of the buttons by highlighting the buttons 2602 according to the order of aural presentation.

### LISTEN AND DO

Applicants believe that a degraded representational fidelity of the auditory system in older adults causes an additional difficulty in the ability of older adults to store and use information in auditory working memory. This deficit manifests itself behaviorally in the subject's poor ability to understand and follow a sequence of verbal instructions to perform a complex behavioral task. Therefore, goals of the exercise Listen and Do include: 1) exposing the auditory system to a substantial amount of speech that has been processed to emphasize and stretch the rapid frequency transitions; and 2) driving improvements in speech comprehension and working memory by requiring participants to store and use such speech information. In this task, the participant is given auditory instructions of increasing length and complexity.

The task requires the subject to listen to, understand, and then follow an auditory instruction or sequence of instructions by manipulating various objects on the screen. Participants hear a sequence of instructions (e.g., "click on the bank" or "move the girl in the red dress to the toy store and then move the small dog to the tree"). Following the presentation of the instruction sequence, the participant performs the requested actions. The task is made more difficult by making the instruction sequence contain more steps (e.g., "click on the bus and then click on the bus stop"), by increasing the complexity of the object descriptors (i.e., specifying adjectives and prepositions), and manipulating the level of speech processing the instruction sequence receives. A complete description of the flow through the processing levels in the exercise Listen and Do is found in Appendix E.

Referring now to Figure 27, a screen shot 2700 is shown during an initial training portion of the exercise Listen and Do. This screen occurs after the participant selects the start button. An auditory message prompts the participant to click on the café 2702. Then, the café 2702 is highlighted in red to show the participant what item on the screen they are to select. Correct selection causes a "ding" to be played, and increments the score indicator. Incorrect selection causes "thunk" to be played. The participant is provided several examples during the training portion so that they can understand the items that they are select. Once the training portion is successfully completed, they are taken to a normal training exercise, where trials of processed speech are presented.

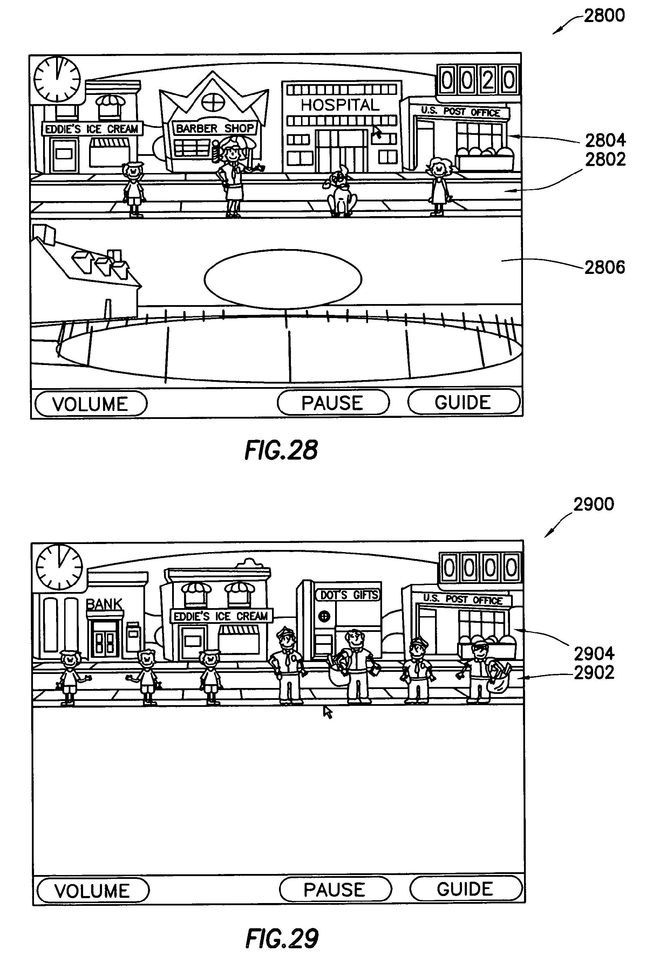

Referring now to Figure 28, a screen shot 2800 is shown during a trial within the Listen and Do exercise. In this trial, there are 4 characters 2802 and 4 locations 2804 that may be used to test the participant. Further, as in the other exercises, a graphical reward portion 2806 is provided to show progress within the exercise.

Referring now to Figure 29, a screen shot 2900 is shown during a more advanced training level within the exercise Listen and Do. In this screen 2900 there are 7 characters 2902 and 4 locations 2904 to allow for more complex constructs of commands. A complete list of the syntax for building commands, and the list of available characters and locations for the commands are found in Appendix E.

### STORY TELLER

Applicants believe that the degraded representational fidelity of the auditory system in older adults causes an additional difficulty in the ability of older adults to store and use information in auditory working memory. This deficit manifests itself behaviorally in the participant's poor ability to remember verbally presented information. Therefore applicants have at least the following goals for the exercise Story Teller: 1) to expose the participant's auditory system to a substantial amount of speech that has been processed to emphasize and stretch the rapid frequency transitions; and 2) to drive improvements in speech comprehension and working memory by requiring participants to store and recall verbally presented information. This is done using a story recall task, in which the participant must store relevant facts from a verbally presented story and then recall them later. In this task, the participant is presented with auditory stories of increasing length and complexity. Following the presentation, the participant must answer specific questions about the content of the story.

The task requires the participant to listen to an auditory story segment, and then recall specific details of the story. Following the presentation of a story segment, the participant is asked several questions about the factual content of the story. The participant responds by clicking on response buttons featuring either pictures or words. For example, if the story segment refers to a boy in a blue hat, a question might be: "What color is the boy's hat?" and each response button might feature a boy in a different color hat or words for different colors. The task is made more difficult by 1) increasing the number of story segments heard before responding to questions 2) making the stories more complex (e.g., longer, more key items, more complex descriptive elements, and increased grammatical complexity) and 3) manipulating the level of speech processing of the stories and questions. A description of the process for Story Teller, along with a copy of the stories and the stimuli is found in Appendix F.

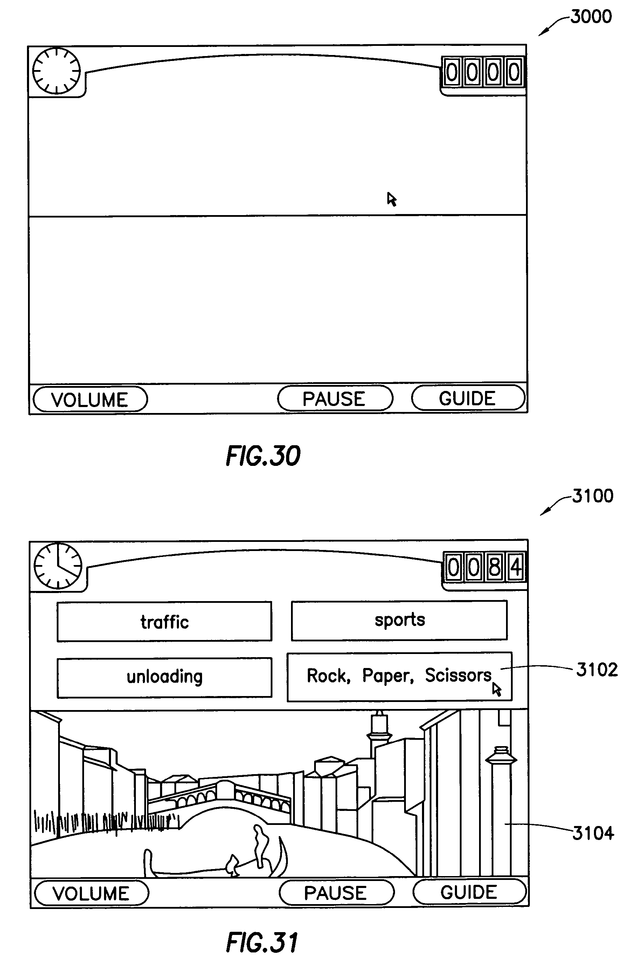

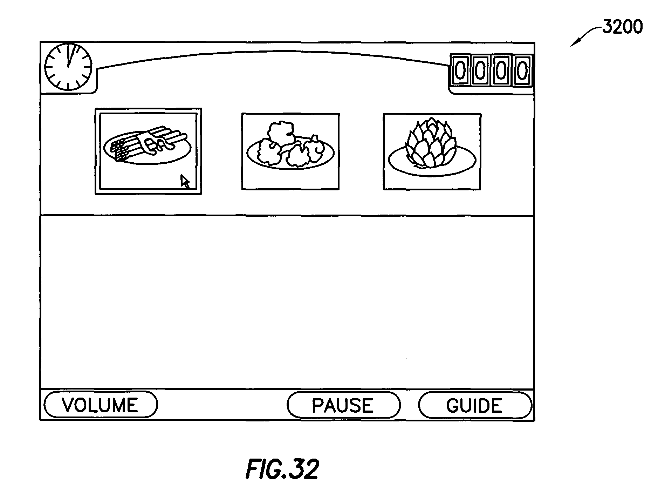

Referring now to Figure 30, a screen shot 3000 is shown of an initial training screen within the exercise Story Teller. After the participant selects a start button, a segment of a story is aurally presented to the participant using processed speech. Once the segment is presented, the start button appears again. The participant then selects the start button to be presented with questions relating to the story.
Referring now to Figure 31, a screen shot 3100 is shown of icons 3102 that are possible answers to an aurally presented question. In one embodiment, the aurally presented questions are processed speech, using the same processing parameters used when the story was presented. In some instances, the icons are in text format, as in Figure 31. In other instances, the icons are in picture format, as in Figure 32. In either instance, the participant is required to select the icon that best answers the aurally presented question. If they indicate a correct response, a "ding" is played, the score indicator is incremented, and the graphical reward portion 3104 is updated, as above. If they indicate an incorrect response, a "thunk" is played.

### PROGRESSIONS IN HiFi ASSESSMENTS

Exercise based assessments are designed to assess a participant's threshold with respect to stimuli on a given exercise. The assessment can be used to assess or determine a pre-training threshold that can then be used to calibrate the program to an individual's capabilities on various exercises as well as serve as a baseline measure to which post-training thresholds can be compared. Comparison of pre-training to post-training thresholds may be used to determine the gains made as a function of training with the cognition enhancement exercises described herein.

In some embodiments, exercise based assessments may be similar or even identical to the actual exercises in appearance with the exception of the rewards and points systems. Since assessments are not designed to be training tools, but rather assessment tools, the rewards screen, progress bar, and points are not needed. However, the bells and thunks associated with correct and incorrect responses may remain, i.e., may still be used.

There are various approaches whereby such thresholds may be assessed, such as, for example, the well known QUEST (Quick Estimation by Sequential Testing) threshold method, which is an adaptive psychometric procedure for use in psychophysical experiments, or a related method, referred to as the ZEST (Zippy Estimation by Sequential Testing) procedure or method, among others, although it should be noted that such methods have not heretofore been utilized in cognition enhancement exercise assessments as described herein.

The ZEST procedure is a maximum-likelihood strategy to estimate a subject's threshold in a psychophysical experiment based on a psychometric function that describes the probability a stimulus is detected as a function of the stimulus intensity. For example, consider a cumulative Gaussian psychometric function, F(x-T), for a 4-alternative-forced-choice (afc) task with a 5% lapsing rate, with proportion correct (ranging from 0-1) plotted against intensity of the stimulus (ranging from 0-5). As used herein, the term intensity (with respect to stimuli) refers to the value of the adaptive dimension variable being presented to the user at any particular trial in a particular exercise. For example, as will be discussed below, in the High or Low exercise, the intensity value is the sweep duration (in log millisecond); for the Sound Replay exercise, it is the word list length (e.g., as a fraction); for the Listen and Do exercise, it is the instruction list length (e.g., as a fraction), and so forth. In other words, the intensity value is that parameter regarding the exercise stimuli that may be adjusted or adapted, e.g., to make a trial more or less difficult. The threshold is defined to be the mean of the Gaussian distribution - a value yielding 60% success rate, which corresponds to an intensity of 2.

The method may make some assumptions about the psychophysics:
1. The psychometric function has the same shape, except a shift along the stimulus intensity axis to indicate different threshold value.
2. The threshold value does not change from trial to trial.
3. Individual trials are statistically independent.

The primary idea of the ZEST procedure is as follows: given a prior probability density function (P.D.F.) centered around the best threshold guess, x, this P.D.F. is adjusted after each trial by one of two likelihood functions, which are the probability functions that the subject will respond "yes" or "no" to the stimulus at intensity as a function of threshold. Since the psychometric function has a constant shape and is of the form F(x-T), fixing the intensity x and treating threshold T as the independent variable, the "yes" likelihood, p=F(-(T-x)), is thus the mirror image of the psychometric function about the threshold, and the "no" likelihood function is then simply 1-p.

The P.D.F. is updated using Bayes' rule, where the posterior P.D.F. is obtained by multiplying the prior P.D.F. by the likelihood function corresponding to the subject's response to the trial's stimulus intensity. The mean of the updated (or posterior) P.D.F. is then used as the new threshold estimate and the test is repeated with the new estimate until the posterior P.D.F. satisfies a confidence interval criteria (e.g. standard deviation of posterior P.D.F. < predetermined value) or a maximum number of trials is reached.

In one example of the ZEST procedure, a single trial of a 4-afc experiment is performed, with x=2.5 (intensity) as the initial threshold guess. If the subject responds correctly, the next trial is placed at the mean of the corresponding posterior P.D.F., ~ x=2.3; if the response is incorrect, the next trial is placed at the mean of the corresponding P.D.F., ~ x=2.65.

In some embodiments of the exercised based assessments described herein, a 2-stair ZEST procedure may be employed, where two independent tracks with starting values, preferably, encompassing the true threshold, each running its own ZEST procedure, are randomly interleaved in the threshold seeking procedure. In addition to their individual termination criterion, the difference between the two stairs may also be required to be within a specified range, e.g., the two stairs may be constrained to be a predetermined distance apart. An exemplary implementation of this method is described below with respect to the High or Low threshold assessment.

As used herein, the parameters required for ZEST may include the mean of the prior P.D.F. (threshold estimate), the standard deviation of the prior P.D.F. (spread of threshold distribution), the standard deviation of the cumulative Gaussian distribution (slope of psychometric function), the maximum number of trials to run, and a confidence level and interval. Additionally, in one embodiment, the trial-by-trial data saved for analysis may include: the track used, the stimulus intensity presented, the subject's response, the mean of posterior P.D.F., and the standard deviation of the posterior P.D.F., as well as any other data deemed necessary or useful in assessing the participant's threshold.

In various embodiments, an assessment performed with respect to a given exercise may be performed independently of the training exercise, or, alternatively, may be performed in conjunction with the training exercise (although it should be noted that in either case, the primary aspects and mechanisms of the exercise are performed). For example, in some embodiments, a first assessment may be performed, e.g., using a representative set or subset of data for the exercise, then the exercise may be performed as a training exercise, e.g., using the full or regular data set for the exercise, after which another, second, assessment may be performed, e.g., again using the representative set or subset of data for the exercise. A comparison of the adult's performance on the pre (exercise) and post (exercise) assessments may be used to gauge the effectiveness of the training (middle) exercise. An exemplary embodiment using this approach is described in detail below with respect to the Match It assessment, although it should be noted that this approach may be used regarding any of the exercises described herein, or others. The following describes exemplary embodiments of exercises implementing threshold assessments specific to the respective exercises. It should be noted that the particular implementations described may be used with respect to other, e.g., similar, exercises, as well.

### High or Low Threshold Assessment

The following threshold assessment method is based on the High or Low exercise described above with reference to Figures 9-15.

A primary purpose of the High or Low threshold assessment is to determine the smallest duration of tone sweeps in a timer order judgment task that a person can respond correctly to above a statistical threshold. The High or Low assessment may be similar to the High or Low exercise with respect to visual presentation, where the differences between the assessment and the exercise lie (at least primarily) in the movement or progression through the task and the data that are obtained from this movement for the assessment. The task is designed to obtain a threshold, which is a statistical rather than an exact quantity. For the purposes of this task, the threshold is defined as the smallest duration of tone sweep (in milliseconds) at which a participant will fail to respond correctly a specified percentage, e.g., 69%, of all trials for a serial order judgment task. In a preferred embodiment, being a computer based task, the High or Low assessment may use the ZEST procedure to progress or move through the task, adjust the duration of the tone sweeps to be presented, and determine the statistical threshold.

As noted above, many aspects of the High or Low assessment may generally be similar, or possible even identical, to the High or Low exercise with respect to visual presentation. However, some aspects of the exercise version of High or Low are not necessary in the High or Low assessment. For example, the progress bar normally displayed on the upper left hand corner, the points bar, and the reward area are not necessary, and so may be omitted. The features or assets that remain the same include the buttons and the "ding" and "thump" sounds that play after a participant responds correctly or incorrectly. Also identical to the exercise version, may be the stimulus presentation.

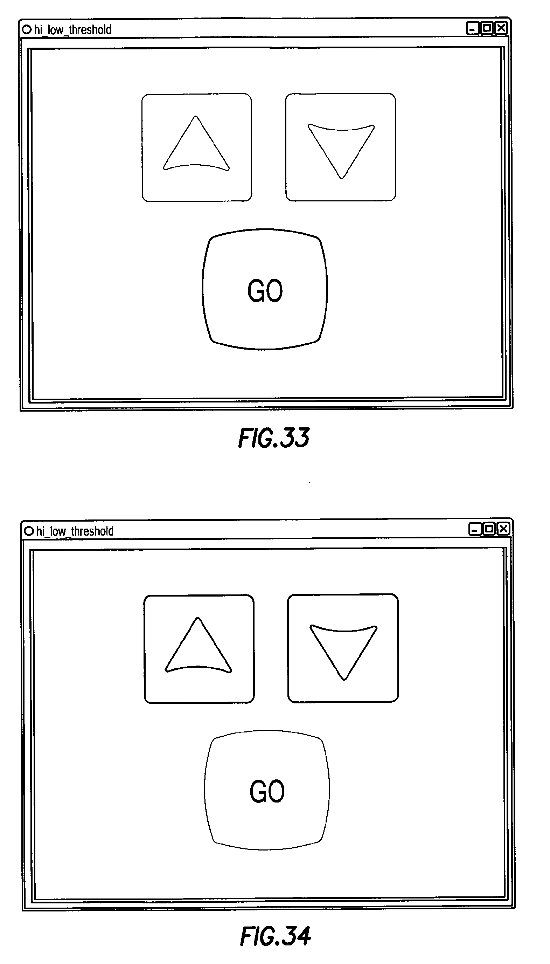

Figures 33 and 34 illustrate one embodiment of a graphical interface for the High or Low assessment, where a go or start button and arrow buttons for designating upward or downward sweeps are shown, either activated or inactivated. As shown in Figure 33, initially the only active button on the screen is the go or start button. Once the go or start button is clicked on, it is deactivated, and the arrow buttons are activated. Note that in other embodiments, the inactive or deactivated buttons may not be shown, or may be presented in different dialogs (see Figures 9 and 10, described above), instead of being "grayed out", as shown in Figures 33 and 34.

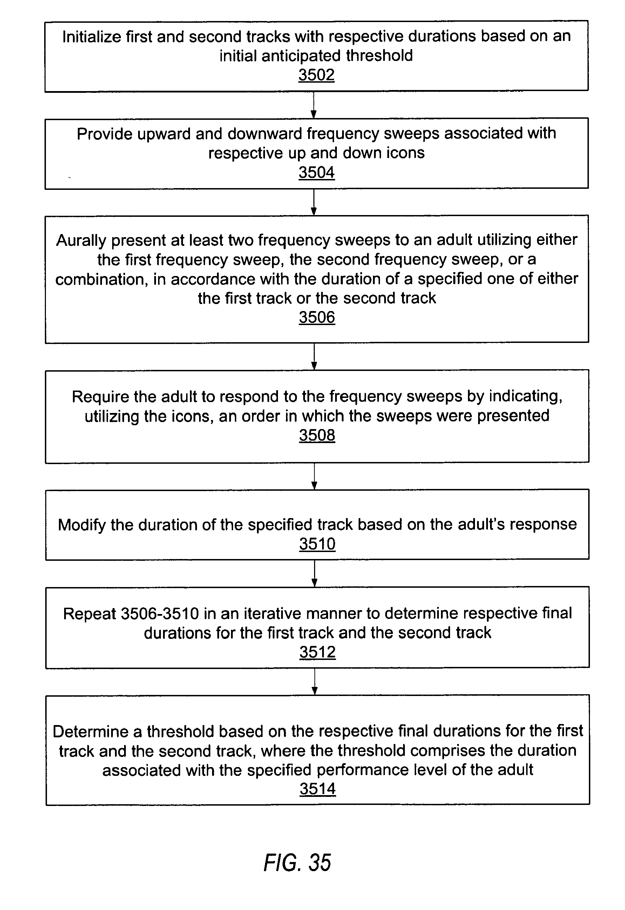

Figure 35 is a high level flowchart of one embodiment of a method for determining a psychophysical threshold for an aging adult, utilizing a computing device to present aural presentations to the adult, and to record responses from the adult. Note that in various embodiments, some of the method elements may be performed concurrently, in a different order than shown, or may be omitted. Additional method elements may also be performed. As shown, the method may operate as follows:

In 3502, first and second tracks may be initialized with respective durations based on an initial anticipated threshold, where the initial anticipated threshold is an initial estimate or guess of a duration for frequency sweeps corresponding to a specified performance level of the adult, e.g., a stimulus duration at which the adult fails to respond correctly some specified percentage of the time, e.g., 69%. For example, in one embodiment, the first track may be initialized to a first duration that is below the initial anticipated threshold, e.g., preferably just slightly below the initial anticipated threshold, and the second track may be initialized to a second duration that is (e.g., slightly) above the initial anticipated threshold. Thus, the initial durations of the two tracks may straddle the initial anticipated threshold.

In 3504, upward and downward frequency sweeps associated with respective "up" and "down" icons may be provided. For example, a first frequency sweep that increases in frequency over time may be provided, and associated with a first icon, e.g., a button that displays an up arrow (see, e.g., Figures 33 and 34, described above), and a second frequency sweep that decreases in frequency over time may be provided, and associated with a second icon, e.g., a button that displays a down arrow. For example, associating the first frequency sweep with the first icon may include aurally presenting the first frequency sweep, and then highlighting the first icon to indicate to the adult the association. Similarly, associating the second frequency sweep with the second icon may include aurally presenting the second frequency sweep, and then highlighting the second icon to indicate to the adult the association. Both the first and second frequency sweeps are then available for aural presentation to the adult.

In 3506, at least two frequency sweeps may be aurally presented to the adult utilizing the first frequency sweep, the second frequency sweep, or a combination of the first and second frequency sweeps, in accordance with the duration of a specified one of either the first track or the second track. In other words, one of the tracks may be selected or otherwise determined, and the frequency sweeps may be presented with durations of the selected track. In one embodiment, the aurally presenting may include randomly selecting at least two frequency sweeps to be presented, utilizing combinations of the first frequency sweep and the second frequency sweep. In one embodiment, the first frequency sweep may be referred to as UP, and the second frequency sweep may be referred to as DOWN, and the aurally presenting at least two frequency sweeps may include any of the following possible combinations: UP-UP, UP-DOWN, DOWN-UP, and DOWN-DOWN. Of course, other sequences of sweeps are also contemplated, and any such sequence may be used as desired, e.g., UP-DOWN-UP, DOWN-DOWN-UP-DOWN, and so forth. Note that the aural presentations may be made via any of a variety of means, such as, for example, via headphones attached to the computing device, speakers, and so forth.

Note that the frequency sweeps are presented (sequentially) with an inter-stimulus-interval (ISI), i.e., a specified time interval between successive frequency sweeps. In preferred embodiments, the initial anticipated threshold, the first duration, the second duration, and the (to be determined) threshold each includes a respective sweep duration, and a respective inter-stimulus-interval (ISI). In other words, the term "duration" may refer to the actual sweep duration and the ISI, and so may be a compound parameter or value.

The frequency ranges for the sweeps may be specified as desired, e.g., based on typical (aging) adult hearing frequency responses. For example, in some embodiments, if the sweep duration is above 80ms, the frequency range for the sweep may be approximately 1000Hz to 2428Hz. If the sweep duration is below 80ms, the frequency range for the sweep may be 16 octaves-per-second with minimum of 1000Hz. Thus, for example, if the sweep duration for a frequency sweep is 70ms, the frequency range may be 1000Hz to 2174Hz. It should be noted, however, that these particular values and relationships for the sweeps are meant to be exemplary only, and that other values may be used as desired.

Moreover, in one embodiment, the sweep duration and inter-stimulus-interval may be co-varied in the ratio of 1:1. In other words, the sweep duration and inter-stimulus-interval may have the same value, or in some embodiments, may retain the same ratio when varied.

In 3508, the adult may be required to respond to the at least two frequency sweeps by indicating, utilizing the icons, an order in which the at least two frequency sweeps were presented. In other words, the adult may, in response to hearing the sequence of frequency sweeps, indicate the perceived order of the sweeps via the two icons. For example, in the case of the two sweep sequence UP-DOWN, the adult should indicate the order by pressing the "up" icon, and then the "down" icon. For a three sweep sequence, e.g., DOWN-DOWN-UP, the adult should press the "down" icon twice, then the "up" icon, and so forth.

In one embodiment, the requiring may include providing a period of time in which the adult is to select the icons in the order in which the at least two frequency sweeps were presented, selection of the icons made by the adult placing a cursor over a icon and clicking a mouse, wherein each mouse click is recorded as a selection, recording the selections made by the adult, and recording whether the adult correctly identified the order in which the at least two frequency sweeps were presented.

The duration of the specified track may then be modified, based on the adult's response, as indicated in 3510. For example, the duration of the track may be modified in accordance with a maximum likelihood procedure, such as a QUEST (quick estimation by sequential testing) threshold procedure, and/or a ZEST (Zippy Estimation by Sequential Testing) threshold procedure, although other threshold procedures may be used as desired. In one embodiment, for each track, modifying the duration of the specified track based on the adult's response may include increasing the duration if the adult responds incorrectly, and decreasing the duration if the adult responds correctly. As noted above, modifying the duration of a track may include modifying the frequency sweep duration and/or the ISI. Thus, for each trial (in a given track), the duration of the sweep for that trial may be determined by the performance of the previous trial for that track. In other words, the adult's response to the stimulus (frequency sweep) determines that track's next sweep duration via a maximum likelihood method.

In 3512, the above presenting (3506), requiring (3508), and modifying (3510), may be repeated one or more times in an iterative manner to determine respective final durations for the first track and the second track. For example, in one embodiment, trials in the first track and the second track may be performed in an alternating manner, or, alternatively, trials may be performed in the first track and the second track randomly with equal probability. Thus, over numerous trials, the number of trials performed in each track should be equal, or at least substantially equal. In preferred embodiments, the presenting, requiring, and modifying, may be repeated until the durations of the first track and the second track have converged to values within a specified confidence interval, and where the values are within a specified distance from each other, or, until a specified number of trials have been conducted for each track. In other words, the repetition may continue until either some maximum number of trials has been performed, or until convergence conditions for the tracks have been met, both singly, and together. For example, each track may be required converge to a respective duration value (which may include both the sweep duration and the ISI for the track), *and* the convergent values for the two tracks may be required to be within some distance or interval of each other.

In 3514, a threshold for the adult may be determined based on the respective final durations for the first track and the second track, where the threshold is or specifies the duration associated with the specified performance level of the adult. For example, as mentioned above, the determined threshold may specify the duration (sweep duration and/or ISI) at which the adult fails to respond correctly some specified percentage of the trials, e.g., 69%, although it should be noted that any other percentage may be used as desired. In one embodiment, the threshold for the adult may be determined by averaging the respective final durations for the first track and the second track.

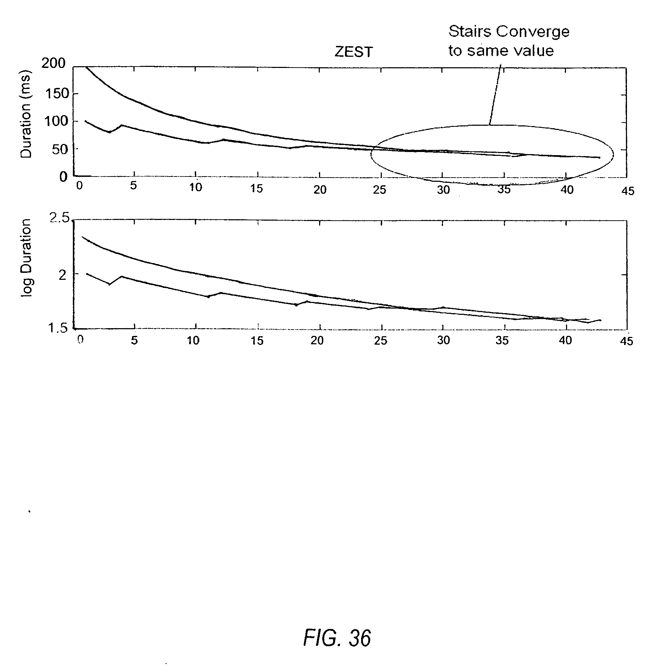

Figure 36 illustrates an exemplary case where two tracks or "stairs" used in a ZEST threshold procedure are shown converging to a threshold value over a series of trials. Note that in the top graph, sweep duration vs. trials is plotted in a linear manner, whereas the bottom graph provides the same information but is logarithmic on the duration (vertical) axis. As may be seen, after about 25 trials, the two tracks or stairs converge to a value at or near 50 ms. Thus, the two tracks, initialized respectively to values above and below an initial estimate of the threshold, converge to an approximation of the adult's actual stimulus threshold for the exercise.

In some embodiments, the presenting, requiring, and modifying may compose performing a trial, and certain information may be save on a per trial basis. For example, In one embodiment, for each trial, the method may include saving one or more of: which track was used in the trial, the duration used in the trial, the direction and order of sweeps presented to the adult in the trial, the series of icons used in the adult's response (e.g., UP-button, DOWN-button, UP-button, and so forth), the correctness or incorrectness of the adult's response, the mean of a posterior probability distribution function for the maximum likelihood procedure, and the standard deviation of the posterior probability distribution function for the maximum likelihood procedure.

Additionally, in some embodiments, various parameters for the maximum likelihood procedure besides the respective (initial) durations of the two tracks may be initialized, such as, for example, the standard deviation of a cumulative Gaussian psychometric function for the maximum likelihood procedure, and/or the standard deviation of a prior threshold distribution for the maximum likelihood procedure. For example, in one embodiment, the following values may be used: initial duration values or estimates for the two tracks: 100ms and 200ms; standard deviation of cumulative Gaussian psychometric function: 0.14; Standard deviation of prior threshold distribution: 0.15. Exemplary values for the confidence interval and width are: confidence interval: 0.95; confidence interval width: 0.2, although it should be noted that other values may be used as desired.

In one embodiment, the method may include determining the initial anticipated threshold. For example, the initial anticipated threshold may be determined based on one or more of: the age of the adult, calibration trials performed by the adult, and/or calibration trials performed by other adults, e.g., in a "pilot" program, although it should be noted that any other type of information may also be used as desired to determine the initial anticipated threshold.
In some embodiments, the method may also include performing a plurality of practice trials, i.e., prior to performing the method elements described above. For example, in one embodiment, the initial 20 (or any other number desired) trials may be considered practice and not included in the analysis or assessment of the threshold. Thus, while the initial 20 trials may follow a ZEST (or ZEST-like) stepping procedure, the two stairs may be reset on the 21st trial to the initial track values. As indicated above, the assessment may end when either the two tracks have converged to within a given confidence interval with both tracks also within a certain distance apart or when a maximum number of trials (e.g., 100), evenly conducted between the two tracks, have been performed. The average of the two tracks' ending stage values may thus yield the adult's threshold.

### Tell Us Apart Assessment

The following assessment method is based on the Tell Us Apart exercise described above with reference to Figures 16-19.

A primary purpose of the purpose of the Tell Us Apart assessment is to determine a participant's (i.e., an aging adult's) ability to classify formant transition and segment duration information in making phonetic categorizations. However, since (1) the range of implementations of these contrasts in speech is not readily described with respect to a single dimension along which a detection threshold can be measured, and (2) their realization in the Tell Us Apart exercise emphasis levels does not relate to detection difficulty in a monotonic manner that is sufficiently uniform across participants and contrasts, a participant's success in the Tell Us Apart exercise can currently best be estimated by measuring overall performance across a range of stimuli that is representative of the contrasts and difficulty included in the Tell Us Apart exercise. In other words, an assessment of the aging adult's success in the Tell Us Apart exercise may be estimated by performing a modified version of the exercise (e.g., without visual or auditory feedback) with a restricted but representative data set. More specifically, a single percent correct identification score for a pre-selected (restricted but representative) stimulus set may be determined.

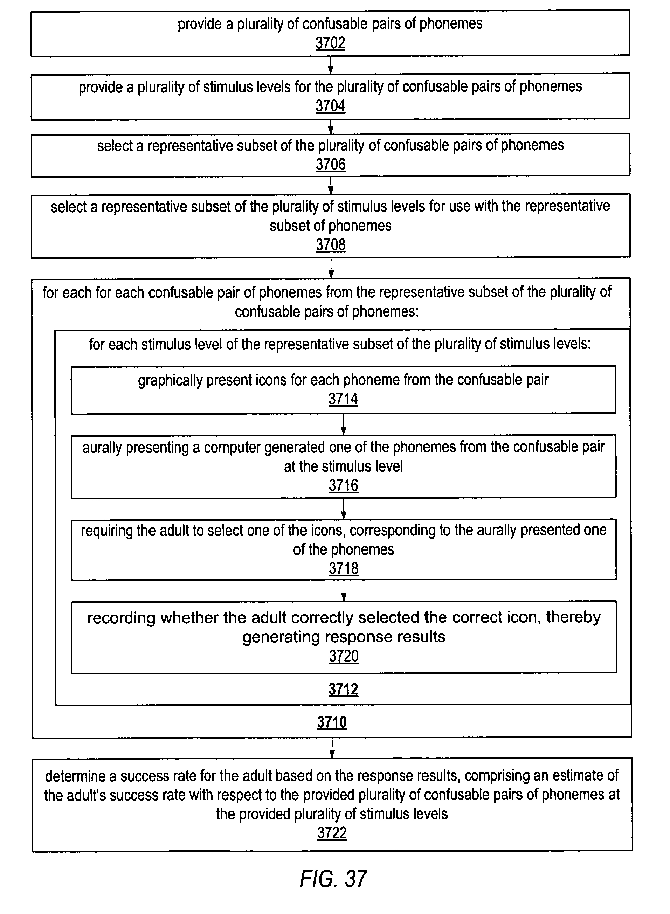

Figure 37 is a high level flowchart of one embodiment of a method for estimating or predicting an aging adult's success with respect to a cognitive enhancement exercise, such as the Tell Us Apart exercise described herein, utilizing a computing device to present aural presentations to the adult, and to record responses from the adult. Note that in various embodiments, some of the method elements may be performed concurrently, in a different order than shown, or may be omitted. Additional method elements may also be performed. As shown, the method may operate as follows:

In 3702, a plurality of confusable pairs of phonemes may be provided, each of the phonemes having a consonant portion and a vowel portion.

In 3704, a plurality of stimulus levels, which may comprise emphasis levels, for computer processing of the plurality of confusable pairs of phonemes may be provided. A stimulus level may specify various timing and/or tonal aspects of a synthesized or computer processed phoneme (or word containing a phoneme) to make discriminating between the phonemes more or less difficult. For example, the plurality of stimulus levels may include stimulus levels that stretch the consonant portion of the phonemes, that vary the relative loudness of the consonant and vowel portions of the phonemes, and/or that vary the gap between the consonant and vowel portions of the phonemes, among others.

In 3706, a representative subset of the plurality of confusable pairs of phonemes may be selected for presentation to the aging adult. In other words, a portion of the plurality of confusable pairs of phonemes may be selected that broadly or substantially covers or represents the range of phonetic attributes of the plurality of confusable pairs of phonemes. For example, the confusable pairs of phonemes may be selected to represent a spectrum of articulation points, including, for example, back of throat, tongue and pallet, and lip generated consonants. As another example, some of the confusable pairs of phonemes may be selected to represent a frequency spectrum of vowels. In one embodiment, at least one of the representative subset of the plurality of stimulus levels may assist the aging adult in discriminating between the consonant and vowel portion of the one of the phonemes being aurally presented. For example, at least one of the plurality of stimulus levels may emphasize and stretch both the consonant and vowel portions of the one of the phonemes.

In 3708, a representative subset of the plurality of stimulus levels may be selected for use with the selected representative subset of confusable pairs of phonemes. Said another way, a portion of the plurality of stimulus levels may be selected that substantially covers or represents the range of attributes of the plurality of stimulus levels. For example, stimulus levels that cover a range of the stimulus attributes described above in 3704 may be selected as a representative subset, e.g., that stretch the consonant portion of the phonemes, that vary the relative loudness of the consonant and vowel portions of the phonemes, and/or that vary the gap between the consonant and vowel portions of the phonemes, among others.

As indicated in 3710 and 3712, each confusable pair of phonemes from the representative subset of the plurality of confusable pairs of phonemes may be processed or considered at each stimulus level of the representative subset of the plurality of stimulus levels. Specifically, for each confusable pair of phonemes from the representative subset of the plurality of confusable pairs of phonemes, and for each stimulus level of the representative subset of the plurality of stimulus levels, the following described method elements of 3714 - 3720 may be performed.

As indicated in 3714, icons for each phoneme from the confusable pair may be graphically presented on the computing device. In other words, icons for each phoneme from the confusable pair may be graphically presented on the computing device, where, for example, each icon may textually and phonetically represent the respective phoneme. For example, buttons may be displayed that are respectively labeled with the phonemes of the confusable pair, as illustrated in Figures 17 and 19, described above. Thus, the icons may be or include visual representations of the phonemes on the computing device. Note that in preferred embodiments, the visual representations are independently selectable by the aging adult.

In 3716, a computer generated one of the phonemes from the confusable pair may be aurally presented on the computing device, the computer generation corresponding to the stimulus level. In other words, one of the phonemes from the confusable pair may be synthesized and aurally or audibly presented in accordance with the stimulus level (of the representative subset of the plurality of stimulus levels). Note that in some embodiments, the term "computer generated" may indicate that the phonemes are generated algorithmically by the computing device rather than simply processing recorded speech. Moreover, in some embodiments, the aurally presenting may be performed by a selected one of a plurality of synthesized speakers, where in this use, "speaker" refers to a source of speech, such as a human speaker, not a device for presenting general sounds, such as a stereo speaker. In one embodiment, the aurally presented computer generated one of the phonemes may be randomly selected from the confusable pair. In one embodiment, the aurally presenting the phoneme may be performed via headphones coupled to the computing device, although any other means, e.g., computer speakers, may be used as desired.

In 3718, the adult may be required to select one of the icons, specifically, the icon corresponding to the aurally presented phoneme. In other words, the adult may be required to select the aurally presented phoneme by selecting the corresponding icon. For example, the adult may have to move a selection tool, e.g., a computer mouse, over one of the icons, and indicate the selection, e.g., by clicking a button on the mouse while the cursor is over the icon. Note that any other means of selection are also contemplated.

In 3720, the correctness or incorrectness of the adult's icon selection may be recorded, i.e., whether the adult correctly selected an icon corresponding to the aurally presented one of the phonemes may be recorded, thereby generating response results. In other words, the method may include recording whether the adult correctly selected an icon corresponding to the aurally presented one of the phonemes, e.g., for later analysis. Thus, method elements 3714 - 3720 may be performed for each confusable pair of phonemes in the representative subset of the plurality of confusable pairs of phonemes, at each stimulus level in the representative subset of the plurality of stimulus levels.

In 3722, a success rate for the adult may be determined based on the response results, where the success rate includes or is an estimate of the adult's success rate with respect to the provided plurality of confusable pairs of phonemes at the provided plurality of stimulus levels. In other words, a single score or metric may be determined based on the recorded responses of the adult, where, because the confusable pairs of phonemes and the stimulus levels were respective representative subsets of the pluralities of confusable pairs of phonemes and stimulus levels, the determined success rate may be indicative (i.e., predictive) of how well the adult would perform with the provided pluralities of confusable pairs of phonemes and stimulus levels.

In one embodiment, the method may further include repeating the method elements of 3714- 3720, specifically, the graphically presenting, aurally presenting, requiring, and recording, in an iterative manner for each confusable pair of phonemes of the representative subset of the plurality of confusable pairs of phonemes, at each stimulus level of the representative subset of the plurality of stimulus levels, where determining the success rate for the adult may be further based on response results from this repeating. In other words, the graphically presenting, aurally presenting, requiring, and recording, may be performed for each phoneme pair at each stimulus level more than once, and the total results used to determine the success rate.

For example, in one embodiment, for each phoneme contrast (confusable pair of phonemes)/level of the respective subsets, the adult may be asked or required to identify a specified number of items, e.g., 30, (randomly) selected from the same confusable pair. In some embodiments, illustrative practice examples may be presented first. For example, in one embodiment, the adult may first hear a specified number of randomly ordered practice items (e.g., 10), for which answers may be provided, after which the above representative trials may be performed for assessment.

Note that in preferred embodiments, no visual or auditory feedback may be provided to the adult, for example, to minimize learning effects during the test procedure. This is an important difference between the above described assessment method and the regular (Tell Us Apart) exercise.

### Stimuli Specifications

Note that, as described above, the representative subset of confusable pairs of phonemes and the representative subset of stimulus levels, collectively referred to as a test set, preferably contains stimuli that are representative of the contrasts and difficulty levels that HiFi participants (performers of the exercise(s) disclosed herein) are exposed to, and sufficiently novel that improvements cannot be attributed solely to learning specific to the set of sounds in HiFi. The following describes one exemplary test set.
In one embodiment, three contrasts (confusable phoneme pairs) may be included in the assessment. For example, two, e.g., bo/do and gi/ki, may be included in the (regular) Tell Us Apart exercise, where one, e.g., gi/ki, may be produced by a novel (female) synthesized speaker. In this particular embodiment test set, an additional (third) contrast, e.g., ba/ga may be included, using the same synthesized speaker as the (regular) Tell Us Apart exercise. Exemplary stimulus or emphasis levels used in the assessment may include (for each of the phoneme pairs): bo/do: 10, 5, 1; gi/ki: 10, 6, 2; and ba/ga/10, 5, 0, although it should be noted that these test set stimulus levels (and confusable phoneme pairs) are meant to be exemplary only, and are not intended to limit the assessment method to any particular set (or subset) of phonemes or stimulus levels.

### Match It Assessment

A primary purpose of the Match It assessment described herein is to assess an aging adult's integration of visual-spatial and auditory memory. The Match It assessment is very similar to the Match It exercise described above, but with several key distinctions, as will be described below.

A general goal of the Match It assessment described herein is to provide a tool to compare pre and post training performance of the aging adult with respect to a visual-spatial and auditory memory exercise, such as the Match It exercise described above. In one exemplary embodiment, the method may use and present data in accordance with a representative subset of the many variables (speech processing level, stimulus category and grid size) used in the regular training exercise a specified number of times, e.g., 5 times, pre and post to allow for a consistent comparison of the adult's performance before and after training. A secondary goal of the Match It assessment method described herein is to develop more advanced analysis than is currently possible given the level of detail in a trial-by-trial database. Additionally, an attempt may be made to quantify memory-span and analyze strategies employed in this task.

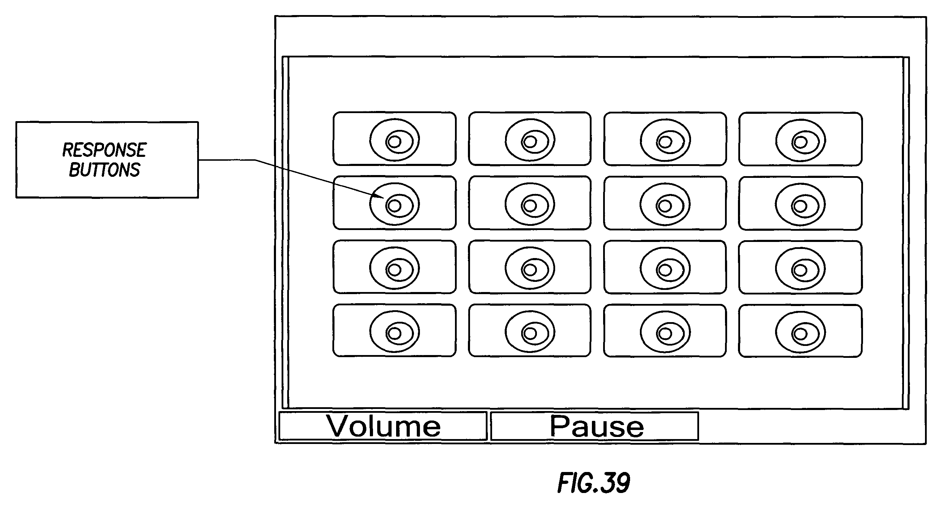

Note that for assessment purposes, in some embodiments, certain visual aspects of the interface of the exercise version of Match It are not necessary, thus, since the method is not concerned with conveying progress to participants who are taking the assessment, all assets, e.g., GUI/auditory indicators, relating to progress are unnecessary (see, e.g., Figure 39, described below) and thus may be omitted.

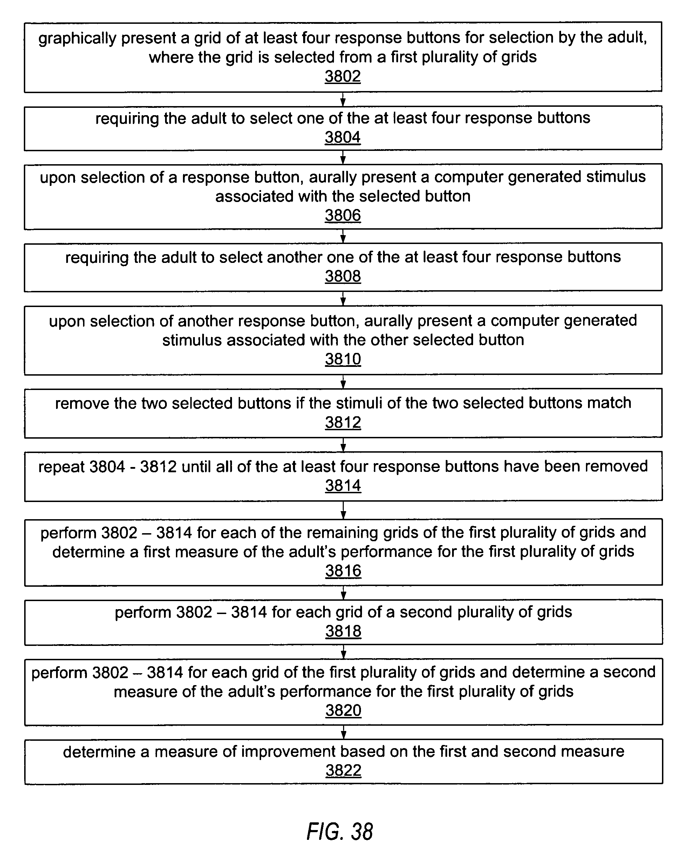

Figure 38 is a high level flowchart of one embodiment of a method for assessing an aging adult's ability to integrate visual-spatial and auditory memory, such as the Match It exercise described herein, utilizing a computing device to provide aural and graphical presentations, and to record responses from the adult. Note that in various embodiments, some of the method elements may be performed concurrently, in a different order than shown, or may be omitted. Additional method elements may also be performed. As shown, the method may operate as follows:

In 3802, at least two pairs of response buttons for selection by the adult may be graphically presented on a computing device, where the at least two pairs of response buttons compose a grid, and where the grid is selected from a first plurality of grids. In other words, a grid of buttons may be graphical presented to the adult, where the grid is from a first plurality of grids, e.g., selected for use in the assessment.

As noted above, in the assessment portion of the method (directed to the first plurality of grids), i.e., for trials performed with respect to the first plurality of grids, no visual or auditory indication of the adult's progress may be provided. Figure 39 illustrates an exemplary embodiment of the assessment screen with a presented grid. In this embodiment, the grid is a 4x4 grid and is void of assets, e.g., indicators, indicating progress. As also shown, in this embodiment, controls are provided for pausing and for adjusting the volume of aural presentations.

In 3804, the adult may be required to select one response button of the at least two pairs of response buttons from the presented grid, e.g., by clicking on a button with a pointing device, such as a mouse, although any other means of selecting the button may be used as desired.

In 3806, upon selection of one response button of the at least two pairs of response buttons by the adult, one of a plurality of computer generated stimuli that has been associated with the selected one response button of the at least two pairs of response buttons may be aurally presented, e.g., via speakers or headphones coupled to the computing device. For example, in one embodiment, the computer generated stimuli may include syllables that may be audibly presented to the adult, e.g., *kiss, dish,* etc. In another embodiment, the computer generated stimuli may include consonant-vowel phonemes, e.g., *ki, na,* etc. In yet other embodiments, the computer generated stimuli may include a plurality of consonant-vowel-consonant syllables, *e.g., fig, lab,* etc.

In 3808, the adult may be required to select another response button of the at least two pairs of response buttons, i.e., where the other response button is different from the button selected in 3804.

In 3810, upon selection of another response button of the at least two pairs of response buttons by the adult, another one of the plurality of computer generated stimuli that has been associated with the selected another response button of the at least two pairs of response buttons may be aurally presented. Thus, each time the adult selects a response button, the stimulus associated with the button may be aurally presented to the adult.

In 3812, the two selected response buttons may be removed if the adult has consecutively selected two response buttons of the at least two pairs of response buttons that have had associated with them a desired pairing, removing those two selected buttons from those presented, e.g., removing the two buttons from the grid. In one embodiment, the desired pairing includes associating the same computer generated aural stimuli with the two consecutively selected response buttons. Thus, for example, in one embodiment, if the stimuli for the two selected buttons match, the buttons may be removed from the grid.

There are numerous ways in which the response buttons may be associated with the computer generated stimuli. For example, in one embodiment, desired pairs of stimuli may be associated with pairs of response buttons prior to graphically presenting the buttons. Alternatively, a stimulus may not be associated with a response button until after the response button is selected. Not associating a stimuli with a response button until after the response button is selected may prevent the adult from accidentally consecutively selecting two response buttons of the at least two pairs of response buttons with the desired pairing, prior to previously hearing the stimuli for each of the selected response buttons. Thus, in some embodiments, a stimulus may be associated with a response button only after the response button has been selected. In one embodiment, the method may include detecting if a chance pairing of response buttons occurs, and if so, changing an association of a stimulus with a selected response button to prevent the chance pairing.

In 3814, the method elements 3804 - 3812 may be repeated until all of the at least two pairs of response buttons have been removed from the grid. In one embodiment, the adult may complete a trial when they have removed all of the at least two pairs of response buttons that have pairs of stimuli associated with them. In another embodiment, a trial may be ended if the adult fails to remove all of the at least two pairs of response buttons within a predetermined number of selections. In one embodiment, a trial may include the presentation of such a plurality of response buttons (in a grid), and may continue as described above until either all of the presented response buttons have been removed, or the adult exceeds a predetermined number of selections for the trial. In other words, a trial may include the above-described method elements repeated until either all the buttons have been matched and removed, or until some maximum number of selections by the adult have been made.

As indicated in 3816, in some embodiments, the method elements 3802 - 3814 may be performed for each of the remaining grids of the first plurality of grids, and a first measure of the adult's performance with respect to the first plurality of grids determined. For example, in one embodiment, the first measure may include the average number of selections made by the adult to clear a grid, e.g., to match all the stimulus pairs of the grid, over all the grids of the first plurality of grids. Thus, the first measure may characterize the adult's performance with regard to the first plurality of grids.

In 3818, the method elements 3802 - 3814 may be performed for each grid of a second plurality of grids. In other words, the steps of graphically presenting (3802) through repeating (3814) may be performed for each grid of a second plurality of grids.

In one embodiment, the second plurality of grids may be directed to training the adult, i.e., via the Match It exercise described above, whereas the first plurality of grids may be directed to assessment or estimation of the adult's capabilities. For example, in one embodiment, the first plurality of grids may include grids that are representative of the grids in the second plurality of grids, e.g., may include grids in accordance with a representative sample of parameter values for the exercise used in training the adult. For example, in one embodiment, the first plurality of grids may have a first processing level, e.g., level 5 (which may be the level closest to human speech), whereas the grids used in training (the second plurality of grids) may include grids at all processing levels, ranging from heavily processed synthetic speech (e.g., level 1) through natural or near-natural processed speech (e.g., level 5).

For example, in one embodiment, performing the steps of graphically presenting through repeating for each grid of a second plurality of grids may include providing a plurality of processing levels for processing the computer generated stimuli, and beginning with a first processing level for aurally presenting the computer generated stimuli which makes the stimuli easy to distinguish. As the adult successfully pairs the stimuli, the amount of processing may be altered towards a last processing level, where, for example, the last processing level is that of normal speech. Additionally, in some embodiments, as the adult successfully pairs the stimuli, the number of response buttons presented in a trial may be increased. Thus, during training (with the second plurality of grids), the trials may be made more difficult as the adult progresses.

In some embodiments, to prevent the adult's memory of grid layout from trial to trial from influencing the adult's performance, the first plurality of grids may include various subsets of grids with different parameters, e.g., size, processing level, stimulus category, etc., where consecutive trials may use grids from different subsets. For example, in one embodiment, the first plurality of grids may include a first subset of grids, referred to as primary stimuli, where each grid has a first size and a first category of stimuli, and a second subset of grids, referred to as secondary stimuli, where each grid has a second size and a second category of stimuli. Thus, trials with respect to the first plurality of grids may alternate between the first subset of grids (primary stimuli) and the second subset of grids (secondary stimuli) to avoid effects of spatial memory of an immediately previous trial.

In 3820, the above-described method elements 3802 - 3814 may be performed (again) for each grid of the first plurality of grids. In other words, the steps of graphically presenting (3802) through repeating (3814) may be performed for each grid of the first plurality of grids. A second measure of the adult's performance with respect to the first plurality of grids may then be determined based on the performing the steps of graphically presenting through repeating for each grid of the first plurality of grids. In other words, trials directed to the assessment grids (the first plurality of grids) may be performed a second time *(after* the training trials directed to the second plurality of grids), and the adult's performance characterized, e.g., by an average number of selections made by the user to clear each grid.

Finally, in 3822, a measure of the adult's improvement may be determined based on the first measure and the second measure. For example, a ratio of the first measure to the second measure may be computed, where a value greater than 1 indicates improvement, presumably due to the intervening training session. In another embodiment, a difference between the two measures may be computed, indicating a difference in average performance from the first assessment to the second assessment. Of course, these particular measures are meant to be exemplary only, and are not intended to limit the types of measures nor the means for determining such measures to any particular type or technique.

### Stimuli Specifications

The following describes exemplary stimulus data sets suitable for use in the above-described method. It should be noted, however, that the data described is meant to be exemplary only, and is not intended to limit the data used in the invention to any particular data sets or attributes.

In one embodiment, the primary stimuli or first subset of the first plurality of grids may be characterized by a grid size of 4 x 4, with 16 total sounds (8 pairs of distinct sounds). Moreover, the computer generated stimuli may have a sound processing level that is closest to human speech, e.g., a sound processing level of 5, from a range of 1 to 5, where a processing level of 1 is heavily processed to emphasize distinguishing attributes of the aurally presented stimuli. The stimulus category may be set at category level 2, which may include the syllables: 'fig', 'rib', 'sit', 'kiss', 'bill', 'dish', 'nut', 'chuck', 'rug', 'dust', 'pun', 'gum ','bash', 'can', 'gash', 'mat', 'lab', and 'nag', although in other embodiments, other syllables may be used as desired.

In one embodiment, the secondary stimulus or second subset of the first plurality of grids may be characterized by a grid size of 3 x 2, with 6 total sounds (3 pairs of distinct sounds). The computer generated stimuli may have a sound processing level that is closest to human speech, e.g., a sound processing level of 5, from a range of 1 to 5, where, as described above, a processing level of 1 is heavily processed to emphasize distinguishing attributes of the aurally presented stimuli. The stimulus category may be set at category level 4 from among a plurality of stimulus categories, where category 4 may include the words (syllables): 'buck', 'bud', 'but', 'cup', 'cut', 'duck', 'dug', 'pug', 'pup', 'tub', 'tuck', 'tug', 'bug', 'cud', 'puck', 'dud', 'gut', 'guck', although in other embodiments, other words may be used as desired.

In one exemplary embodiment, during the assessment portion of the method, the adult may be presented with 9 grids, 5 primary grids and 4 secondary grids, where, as described above, beginning with a primary grid, the grids may alternate between primary and secondary, the purpose of alternating being to remove or ameliorate any spatial memory of the previous trial. Of course, other numbers of grids may be used as desired.
In moving through the task or method, the adult may click a 'start' button on the screen to begin. Once presented with the first grid, the adult may click or select each button in any order or sequence. As the adult clicks on matching buttons in succession, the buttons may be removed from the screen. Once all the buttons are gone, the adult may be presented with a 'start' button to begin the next grid. In other embodiments, once each grid is completed, the next grid may be presented automatically, i.e., without the need for the adult to click or select a start button.

### Sound Replay Threshold Assessment

A primary purpose of the Sound Replay threshold assessment described herein is to determine the number of items a participant can remember in a serial order, specifically, the number of syllables, which corresponds to stage, that a person can respond correctly to above a statistical threshold. The Sound Replay threshold assessment is very similar to the Sound Replay exercise described above, but with several key distinctions, as will be described below. For example, the Sound Replay assessment may be similar to the Sound Replay exercise with respect to visual presentation. At least some of the differences between the assessment and the exercise may be with regard to movement through the task and the data that are obtained from this movement for the assessment. In a preferred embodiment, the task (of the assessment) is designed to obtain a threshold, which is a statistical rather than an exact quantity. For the purposes of this task, "threshold" is defined as the number of sounds (e.g., stage) at which a participant will fail to respond correctly some specified percentage, e.g., 47.5%, of trials. Sound Replay assessment is similar to neuropsychological tasks "digit span" and "digit span backwards", in which subjects must remember the auditory information over short periods of time to identify matching syllables in a temporal domain. Being a computer based task, Sound Replay assessment may use the ZEST algorithm to move through the task, adjust the number of sounds to be presented, and determine the statistical threshold, as described below in more detail.

In the exemplary embodiments described below, a primary goal is to statistically determine the stage value where a participant will fail to respond correctly 47.5% of trials, as mentioned above.

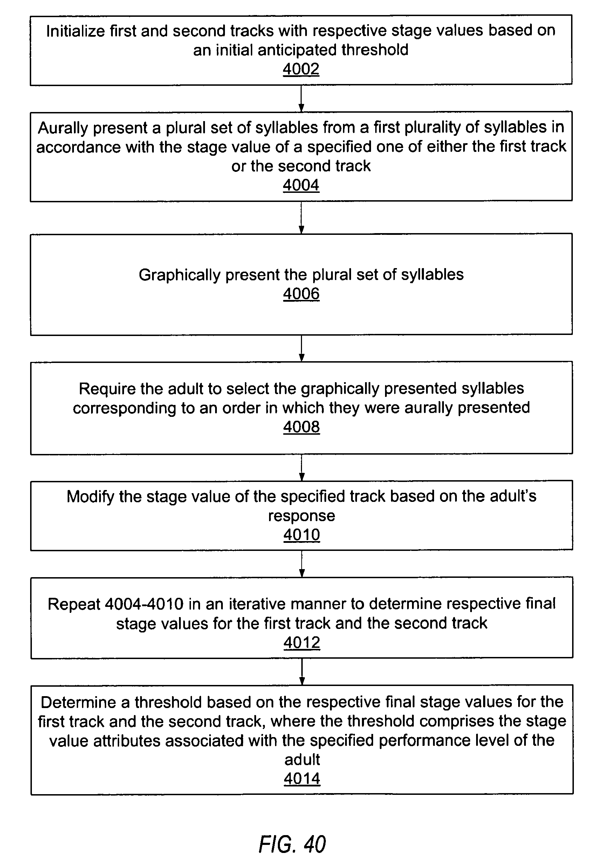

Figure 40 is a high level flowchart of one embodiment of a method for determining an aging adult's threshold with respect to a serial memory exercise, such as the Sound Replay exercise described herein, utilizing a computing device to provide aural and/or graphical presentations, and to record responses from the adult. More specifically, a psychophysical threshold may be determined regarding the aging adult's ability to temporarily store and retrieve an order of syllables. Note that in various embodiments, some of the method elements may be performed concurrently, in a different order than shown, or may be omitted. Additional method elements may also be performed. As shown, the method may operate as follows:

In 4002, first and second tracks may be initialized with respective stage values based on an initial anticipated threshold, where a stage specifies a set of stimulus attributes, and where the initial anticipated threshold specifies an initial estimate of stimulus attributes corresponding to a specified performance level of the adult, e.g., stimulus attributes at which the adult fails to respond correctly some specified percentage of the time, e.g., 47.5%. For example, in one embodiment, the first track may be initialized to a stage value that is below the initial anticipated threshold, e.g., preferably just slightly below the initial anticipated threshold, and the second track may be initialized to a second stage value that is (e.g., slightly) above the initial anticipated threshold. Thus, the initial stage values of the two tracks may straddle the initial anticipated threshold. In one embodiment, the method may include determining the initial anticipated threshold, e.g., based on one or more of: the age of the adult, calibration trials performed by the adult, and/or calibration trials performed by other adults, among others.

In some embodiments, an initialization process may operate to initialize other items as well. For example, the initialization process may include initializing one or more of: the first and second tracks' initial stage values (as indicated above), a standard deviation of a cumulative Gaussian psychometric function for the maximum likelihood procedure, or a standard deviation of a prior threshold distribution for the maximum likelihood procedure.

Note that there may be a specified number of stages used in the method, e.g., stages 1-8, where each stage specifies or is associated with stimulus attributes, as indicated above. For example, in one embodiment, the attributes may include one or more of: a respective number of distinct syllables in the plural set of syllables, a respective number of repeat syllables in the plural set of syllables, a respective number of distractor buttons presented in a trial, and/or a respective inter-stimulus-interval (ISI), denoting a time interval between successive syllables, among others.

In 4004, a plural set of syllables from a first plurality of syllables may be aurally presented on the computing device in accordance with the stage value of a specified one of either the first track or the second track, where the plural set of syllables are presented serially, e.g., where serially indicates that the plural set of syllables are aurally presented, one at a time, e.g., one after another, until all of the syllables in the plural set of syllables have been presented. In preferred embodiments, the aural presentations may be made via headphones attached to the computing device, although speakers may be used as desired. In some embodiments, the syllables may include consonant-vowel-consonant syllables, and/or may include phonemes. In one embodiment, the syllables may be processed to emphasize and stretch rapid frequency transitions, although in some embodiments, the processing used may be minimal, or even none, e.g., to approximate natural human speech.

In 4006, after the aurally presenting of 4004, the plural set of syllables may be graphically presented on the computing device, e.g., via a GUI. For example, in one embodiment, the graphically presenting may include providing a graphical icon (e.g., a graphical response button) for each one of the plural set of syllables, and displaying graphical icons on the computing device that correspond to the aurally presented syllables. The displayed graphical icons may be selectable by the adults using a pointer on the computing device. Moreover, in some embodiments, the graphically presenting may also include graphically presenting distracter syllables along with the first plurality of syllables. The distracter syllables may be provided to the adult to allow the adult to make incorrect selections, i.e., may present incorrect choices for selection by the adult.

In 4008, the adult may be required to select on the computing device the graphically presented syllables corresponding to an order in which they were aurally presented. In other words, the adult may be required to select the graphical icons or buttons representing each aurally presented syllable in the order in which they were presented. Note that the distracter syllables mentioned above may thus be provided to the adult to make the requiring more difficult, since the graphically presented icons or buttons include these incorrect responses among those corresponding to the aurally presented syllables.

In 4010, the stage value of the specified track may be modified based on the adult's response. Modifying the stage value of the specified track based on the adult's response may include modifying the stage value in accordance with a maximum likelihood procedure, such as, for example, a QUEST (quick estimation by sequential testing) threshold procedure, or a ZEST (zippy estimation by sequential testing) threshold procedure, described above. In one embodiment, for each track, modifying the stage value of the specified track based on the adult's response may include increasing the stage value if the adult responds correctly in a specified percentage of trials, and decreasing the stage value if the adult responds incorrectly in the specified percentage of trials. For example, in one exemplary embodiment, if the player obtains a 90% or over correct rate on the first 10 trials, the track's initial values may be increased, and if the player obtains a 90% or over incorrect rate on the first 10 trials, the track's initial values may be decreased, and the assessment may resume, or start over, with the new initial values.

Note that while each stage is discrete, i.e., has an integer value, the stage values determined in the method may not always be integers, and may not always be modified or adjusted in integer amounts. For example, for each iteration of the assessment process described herein (or periodically per some specified number of trials), the method may determine a real (non-integral) stage value. This value may be the true updated stage value, but its rounded value may used to specify the stage to use for the next trial, e.g., a stage value of 3.4 may specify use of stage 3 for the trial, while a stage value of 3.6 may specify use of stage 4 for the trial. In one embodiment, the initial stage values may chosen such that if they are too easy (or too difficult), the next stage used will immediately be incremented (or decremented) one full stage. For example, assuming an adjustment increment/decrement of approximately .2, if 3.6 (which specifies stage 4) were found to be too difficult, the next value would be about 3.4 (specifying stage 3), whereas if 4 had been specified as the initial stage value and the trial were found to be too difficult, the next value (3.8) would still round to 4, and so no effective change would occur. Thus, the initial stage values may be set to real values.

As noted above, the initial anticipated threshold, the first stage value, the second stage value, and the threshold (determined below) may each specify or be associated with one or more of: a respective number of distinct syllables in the plural set of syllables, a respective number of repeat syllables in the plural set of syllables, a respective number of distractor buttons presented in a trial, and/or a respective inter-stimulus-interval (ISI), denoting a time interval between successive syllables. Thus, for each track, increasing the stage value may include one or more of: increasing the respective number of distinct syllables in the plural set of syllables, increasing the respective number of repeat syllables in the plural set of syllables, increasing the respective number of distractor buttons presented in a trial, or decreasing the respective ISI (the time interval between successive syllables). Similarly, for each track, decreasing the stage value may include one or more of: decreasing the respective number of distinct syllables in the plural set of syllables, decreasing the respective number of repeat syllables in the plural set of syllables, decreasing the respective number of distractor buttons presented in a trial, or increasing the respective inter-stimulus-interval. Thus, increasing the stage value for a track may operate to make subsequent trials performed in that track more difficult, while decreasing the stage value for a track may operate to make subsequent trials performed in that track less difficult. Note that the adult's response to the trial conducted at a track's value may thus determine that track's next stage value via the maximum likelihood method.

In 4012, the aurally presenting, graphically presenting, requiring, and modifying (i.e., method elements 4004 - 4010) may be repeated (i.e., performed) one or more times in an iterative manner with respect to other plural sets of syllables from the first plurality of syllables to determine respective final stage values for the first track and the second track.

Finally, in 4014, a threshold for the adult may be determined based on the respective final stage values for the first track and the second track, where the threshold is or includes the stage value associated with the specified performance level of the adult.

In various embodiments, repeating the presenting, requiring, and modifying, one or more times in an iterative manner may include performing trials in the first track and the second track in an alternating manner, or performing trials in the first track and the second track randomly, e.g., with equal probability. Note that in either approach, over many trials the number of trials performed in each track are equal or at least approximately equal. Moreover, in accordance with QUEST or ZEST threshold determination techniques, repeating the presenting, requiring, and modifying, one or more times in an iterative manner may include repeating the presenting, requiring, and modifying, until the stage values of the first track and the second track have converged to values within a specified confidence interval, and where the values are within a specified distance from each other, or, until a specified number of trials have been conducted for each track (e.g., 20 per track).

In preferred embodiments, determining a threshold for the adult based on the respective final stage values for the first track and the second track may include averaging the respective final stage values for the first track and the second track to determine the threshold for the adult. For example, averaging the respective final stage values for the first track and the second track to determine the threshold for the adult may include rounding the average of the respective final stage values for the first track and the second track to determine the threshold for the adult. Thus, a stage value of 4.6 corresponds to stage 5, a stage value of 4.2 corresponds to stage 4, and so forth.

In one embodiment, the presenting, requiring, and modifying described above may compose performing a trial. Certain information may be saved with respect to each trial performed, e.g., for operation of the method, and/or for subsequent analysis of the assessment. For example, for each trial, one or more of the following may be saved: which track was used in the trial, the stage value used in the trial, the series of syllables presented to the adult, the button to syllable assignments, the series of button selections by the adult, the correctness or incorrectness of the adult's response, the mean of a posterior probability distribution function for the maximum likelihood procedure, and the standard deviation of the posterior probability distribution function for the maximum likelihood procedure. Of course, any other type of information may also be saved as desired.

As indicated above, the adult may interact with the assessment process via a GUI presented on the computing device, similar to the GUI used in the training exercise (Sound Replay). However, some aspects of the exercise version of Sound Replay may not be necessary in the Sound Replay assessment. For example, a progress bar, points bar, and reward area included in the training exercise GUI (of Sound Replay) are not necessary, since progress/reward indicators are not used in the assessment. However, in some embodiments, some of the GUI elements or assets may remain the same, such as the response buttons and the "ding" and "thump" sounds that play after an adult responds correctly or incorrectly. The stimulus presentation may also be identical to the exercise version. In one embodiment, initially the only button in the screen is the start button. However, because the adult will not already know the number of sounds to be presented for each trial, the number of sounds to be played may be displayed in the space of the response buttons.

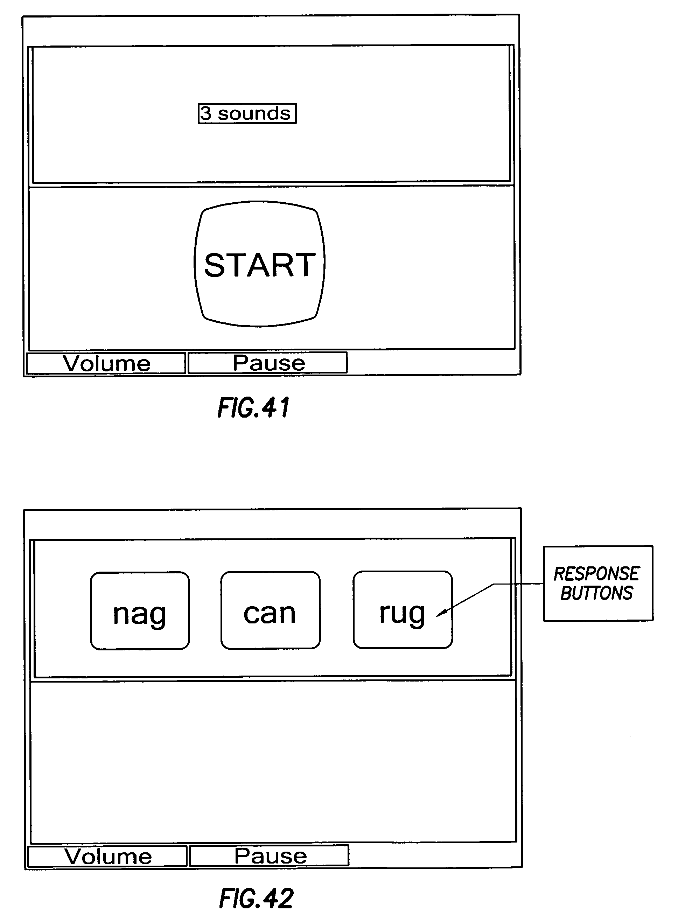

Figure 41 illustrates one embodiment of an initial screen showing the start button, e.g., as an example of the interface before the start button is pressed. As may be seen, the number of sounds (syllables) to be presented (in the trial) is also shown, in this case, 3. As also shown, in this embodiment, controls are provided for pausing and for adjusting the volume of aural presentations.

After the participant clicks on the start button, the sounds (syllables) may be played and the buttons displayed in random order, as described above. Figure 42 illustrates an example of the interface after the start button is pressed, according to one embodiment. As shown, three response button or graphical icons are displayed, each corresponding to a syllable or sound, in this case, "nag", "can", and "rug". As described above, the adult may select from among these buttons to indicate an order of aurally presented syllables. Note, for example, that if the series of aurally presented syllables were "nag", "rug", "nag", then the correct button sequence would be "nag", "rug", "nag", where the "can" button would be a distractor button.

### Stimuli Specifications

The following describes exemplary stimulus data sets suitable for use in the above-described method. It should be noted, however, that the data described is meant to be exemplary only, and is not intended to limit the data used in the invention to any particular data sets or attributes.

In one embodiment, for assessment purposes, the sound processing level for presentation of the syllables may be set at level 5, where level 5 is the level closest to human speech. This is in contrast to the processing levels used in the normal training exercise (Sound Replay), ranging from heavily processed synthetic speech (e.g., level 1), e.g., to emphasize distinguishing attributes of the aurally presented stimuli, through natural or near-natural processed speech (e.g., level 5).

In some embodiments, the stimulus category may be set at category level 2, from among a plurality of available categories, where category 2 may include the syllables: 'fig', 'rib', 'sit', 'kiss', 'bill', 'dish', 'nut', 'chuck', 'rug', 'dust', 'pun', 'gum ','bash', 'can', 'gash', 'mat', 'lab', and 'nag', although in other embodiments, other syllables may be used as desired.

As noted above, in preferred embodiments, the stage parameters may be the same as the stage parameters for the Sound Replay exercise. Exemplary stage parameters and their ranges are provided below:

| Stage | Number of Distinct Sounds | Number of Repeat Sounds | Number of Distractor Buttons | Interstimulus Interval (ms) |
|---|---|---|---|---|
| 1 | 2 | 0 | 0 | 1200 |
| 2 | 3 | 0 | 0 | 1100 |
| 3 | 4 | 0 | 0 | 1000 |
| 4 | 4 | 1 | 1 | 950 |
| 5 | 5 | 1 | 1 | 900 |
| 6 | 5 | 2 | 1 | 850 |
| 7 | 5 | 3 | 2 | 800 |
| 8 | 6 | 3 | 2 | 750 |

### Initialization Values

In one embodiment, initial values for the assessment process may be set at:
Initial stage values: 2.4 and 3.6
Confidence Interval: 0.95
Confidence Interval Width: 0.5
Standard deviation of cumulative Gaussian psychometric function: 1
Standard deviation of prior threshold distribution: 1
However, it should be noted that in other embodiments, other values may be used as desired.

### Listen and Do Threshold Assessment

A primary purpose of the Listen and Do threshold assessment described herein is to determine the number of instructions (associated with a stage value) an aging adult can remember and perform in a serial order correctly above a statistical threshold. The Listen and Do assessment is similar to the Listen and Do exercise described above with respect to visual presentation. In preferred embodiments, the differences between the assessment and the training exercise are primarily in the movement or progression through the task and the data obtained for the assessment. The task is designed to determine a threshold, which is a statistical rather than an exact quantity. For the purposes of this task, "threshold" is defined, as the number of instructions (e.g., stage) at which a participant fails to respond correctly some specified percentage of trials, e.g., 47.5%, with processing level and stimulus category fixed. Note that the Listen and Do assessment described herein may be similar to neuropsychological tasks "digit span" and "digit span backwards", in which subjects must remember auditory information over short periods of time. Being a computer-based task, Listen and Do assessment preferably uses the ZEST algorithm (described above) to move through the task, adjust the number of instructions to be presented, and determine the statistical threshold, as will be described below in detail.

In the exemplary embodiments described below, a primary goal of the Listen and Do assessment is to statistically determine the stage value where a participant will fail to respond correctly 47.5% of trials, as mentioned above.

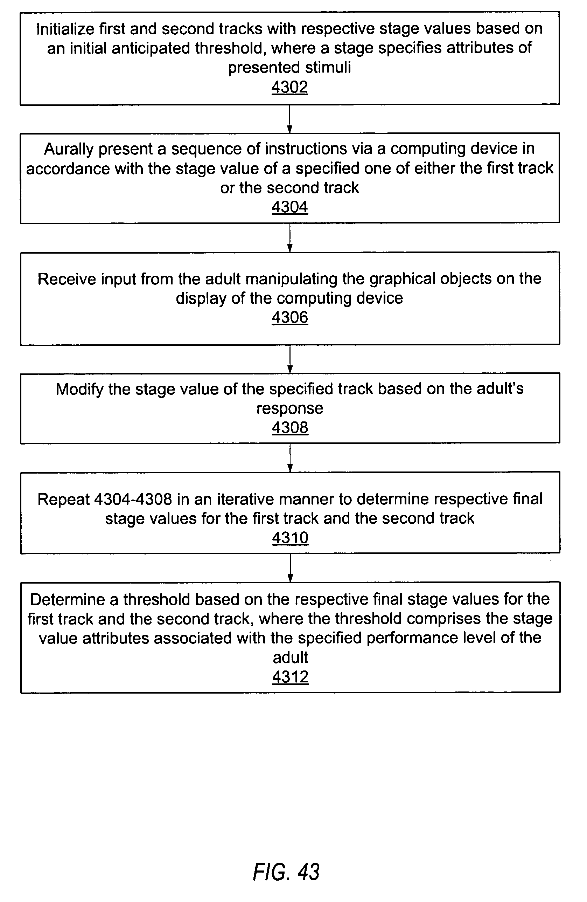

Figure 43 is a high level flowchart of one embodiment of a method for determining an aging adult's threshold with respect to a serial memory exercise. More specifically, a psychophysical threshold may be determined regarding the aging adult's ability to temporarily remember and perform a series of actions, similar to the Listen and Do exercise described herein, utilizing a computing device to provide aural sequences of instructions, and to record responses from the adult. Note that in various embodiments, some of the method elements may be performed concurrently, in a different order than shown, or may be omitted. Additional method elements may also be performed. As shown, the method may operate as follows:

In 4302, first and second tracks may be initialized with respective stage values based on an initial anticipated threshold, where a stage specifies a set of stimulus attributes, and where the initial anticipated threshold specifies an initial estimate of stimulus attributes corresponding to a specified performance level of the adult, e.g., stimulus attributes at which the adult fails to respond correctly some specified percentage of the time, e.g., 47.5%. For example, in one embodiment, the first track may be initialized to a stage value that is below the initial anticipated threshold, e.g., preferably just slightly below the initial anticipated threshold, and the second track may be initialized to a second stage value that is (e.g., slightly) above the initial anticipated threshold. Thus, the initial stage values of the two tracks may straddle the initial anticipated threshold. In one embodiment, the method may include determining the initial anticipated threshold, e.g., based on one or more of: the age of the adult, calibration trials performed by the adult, and/or calibration trials performed by other adults, among others.

In some embodiments, an initialization process may operate to initialize other items as well. For example, the initialization process may include initializing one or more of: the first and second tracks' initial stage values (as indicated above), a standard deviation of a cumulative Gaussian psychometric function for the maximum likelihood procedure, or a standard deviation of a prior threshold distribution for the maximum likelihood procedure.

In 4304, a sequence of one or more auditory instructions that have been processed by the computer may be presented, e.g., via headphones and/or speakers connected to the computing device, where the auditory instructions indicate a corresponding sequence of actions to be performed by the adult. The actions may include or specify manipulations of graphical objects displayed on a display of a computing device. Note that in preferred embodiments, the graphical objects displayed with respect to a sequence of instructions may include a confusable superset of objects referred to in the instructions, i.e., various of the objects may be easily confused by the adult.

The presenting of the sequence of instructions may be made in accordance with the stage value of a specified one of either the first track or the second track. Note that there may be a specified number of stages used in the method, where each stage specifies or is associated with stimulus attributes, as indicated above. For example, in one embodiment, the attributes may include or specify a respective number of distinct instructions in the sequence of instructions, i.e., the length of the sequence. Thus, the initial stage values for the two tracks, the initial anticipated threshold, and the threshold (determined below) may each specify or be associated with a respective number of distinct instructions in the sequence of instructions.

In one embodiment, the sequence of instructions may be selected from a plurality of sequences of instructions, where the plurality of sequences of instructions has a specified stimulus category, i.e., where the plurality of sequences of auditory instructions is from a specified category from a plurality of categories, each category specifying a type of sequences of instructions. For example, in the Listen and Do training exercise described above, sequences of instructions from a variety of categories are used, such as: category 1, where each of the instructions is of lower complexity and is directed to stimulus discrimination where the adult is to select a respective graphical object with a pointing device; category 2, where each of the instructions is of higher complexity and is directed to stimulus discrimination where the adult is to select a respective graphical object with a pointing device, wherein the respective graphical object is qualified by one or more adjectives and/or one or more prepositional phrases; category 3, where each of the instructions is of lower complexity and is directed to memory, and includes an instruction to move a respective first graphical object with respect to a respective second graphical object; and category 4, where each of the instructions is of higher complexity and is directed to memory, and includes an instruction to move a respective first graphical object with respect to a respective second graphical object, where one or both of the respective first graphical object and the respective second graphical object are qualified by one or more adjectives and/or one or more prepositional phrases.

In a preferred embodiment, the sequences used in the Listen and Do assessment described herein may be sequences from category 2. In other words, each of the instructions (in the sequence) may include an instruction to select a respective graphical object with a pointing device, where the respective graphical object may be qualified by one or more adjectives and/or one or more prepositional phrases. Of course, in other embodiments, other sequences of instructions, possibly in other categories, may be used as desired.

As noted above, in some embodiments, the aurally presented instruction sequences may be processed to some degree, e.g., to facilitate understanding by the adult. For example, in the Listen and Do training exercise, there are a number of different processing levels, ranging from heavily processed synthetic speech (e.g., level 1), e.g., to emphasize distinguishing attributes of the aurally presented stimuli, through natural or near-natural processed speech (e.g., level 5), where, for example, the level of processing of the auditory instructions may be based one or more of: 1) modifying a rate at which at least a portion of the auditory instructions are played, while maintaining characteristic pitch-pulse-phase synchronous temporal structure of voiced speech sounds, and 2) emphasizing portions of the auditory instructions, using band-modulation deepening to selectively enhance relatively fast-changing events in the voiced speech sounds.

In preferred embodiments, for assessment purposes, the sound processing level for presentation of the instructions may be set at level 5, where level 5 is the level closest to human speech. In other words, each of the plurality of sequences of auditory instructions may be aurally presented with a specified processing level substantially corresponding to natural speech. This is in contrast to the multiple processing levels used in the normal training exercise (Listen and Do). Of course, in other embodiments, any processing levels may be used as desired. Thus, in some embodiments, each of the plurality of sequences of auditory instructions may have a respective difficulty based a stage, corresponding to the number of instructions in the sequence, and a level of processing of the auditory instructions, where the level of processing corresponds to the degree to which the auditory instructions have been processed to enhance clarity of the auditory instructions.

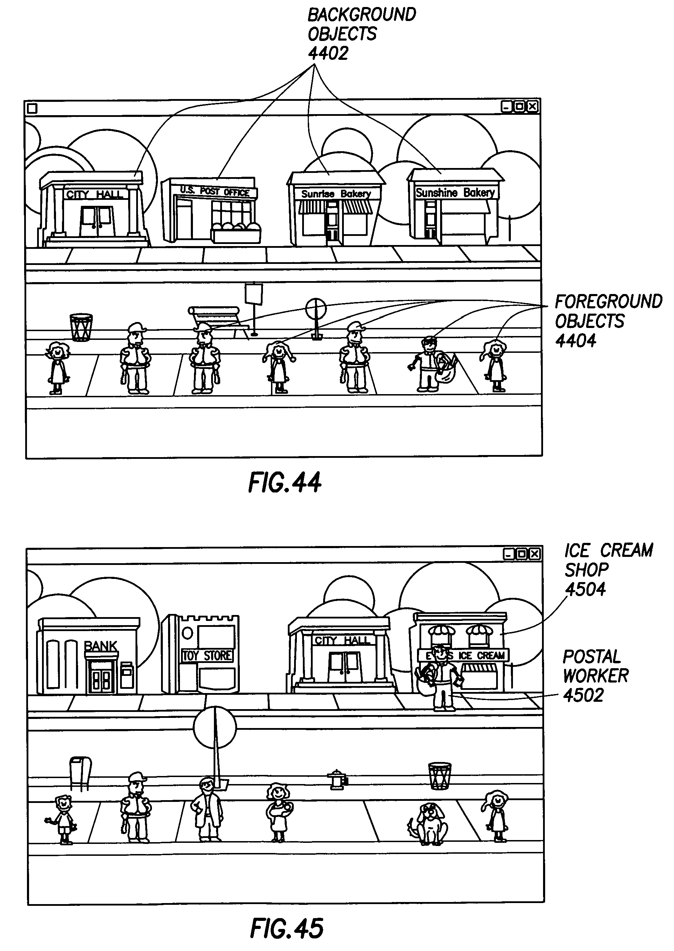

In 4306, input may be received from the adult, where the input manipulates the graphical objects on the display. For example, the adult may click on various items displayed in a GUI presented on a display of the computing device. Figure 44 illustrates an exemplary screen suitable for use in the Listen and Do assessment described herein (and the training exercise (Listen and Do), as well). More specifically, the screen may be suitable for instruction sequences of categories 2 and 4. As Figure 44 shows, in this embodiment, the screen may include one or more (immovable) background objects 4402, such as various buildings, including two bakeries, a city hall, and a post office. As also shown, the screen includes a plurality of (moveable) foreground objects 4404, e.g., various people standing on a sidewalk. Where both the background and foreground objects may be selectable, e.g., "clickable" by a mouse or other pointing device, by the adult. For example, in one embodiment, the adult may be instructed to click on "the girl with the blue dress", and where the input received from the adult may simply be the adult's mouse click on the girl with the blue dress displayed on the screen.

Figure 45 illustrates another exemplary screen that may be suitable for use in the Listen and Do assessment described herein (and the Listen and Do training exercise, as well). More specifically, the screen may be suitable for instruction sequences of category 3. As with Figure 44, the screen of Figure 45 includes background objects (e.g., buildings such as a bank, toy store, city hall, and ice cream shop) and foreground objects (e.g., people and/or animals). In this particular example, a postal worker 4502 has been moved (by the adult) to the ice cream shop 4504, presumably in response to a corresponding sequence of instructions, which is an exemplary category 3 instruction. As noted above, however, in preferred embodiments, the sequences of instructions used in the Listen and Do assessment are from category 2.

In one embodiment, the method may include indicating whether the adult correctly performed the sequence of actions. For example, a respective sound indicating correctness or incorrectness may be presented to the user, e.g., a "ding" indicating correctness, and a "thunk" indicating incorrectness of the response. Additionally, or alternatively, a respective graphical indication of correctness or incorrectness of the response may be presented, e.g., a "success" image, icon, or animation.

In 4308, the stage value of the specified track may be modified based on the adult's response. For example, modifying the stage value of the specified track based on the adult's response may include modifying the stage value in accordance with a maximum likelihood procedure, e.g., in accordance with a QUEST (quick estimation by sequential testing) threshold procedure, or a ZEST (zippy estimation by sequential testing) threshold procedure, as described above in some detail.

In one embodiment, for each track, modifying the stage value of the specified track based on the adult's response may include increasing the stage value if the adult responds correctly in a specified percentage of trials, and decreasing the stage value if the adult responds incorrectly in the specified percentage of trials. For example, similar to the Sound Replay assessment described above, in one exemplary embodiment, if the player obtains a 90% or over correct rate on the first 10 trials, the track's initial values may be increased, and if the player obtains a 90% or over incorrect rate on the first 10 trials, the track's initial values may be decreased, and the assessment may resume, or start over, with the new initial values.

As also described above, it should be noted that while each stage is discrete, i.e., has an integer value, the stage values determined in the method may not always be integers, and may not always be modified or adjusted in integer amounts. For example, for each iteration of the assessment process described herein (or periodically per some specified number of trials), the method may determine a real (non-integral) stage value. This value may be the true updated stage value, but its rounded value may used to specify the stage to use for the next trial, e.g., a stage value of 3.4 may specify use of stage 3 for the trial, while a stage value of 3.6 may specify use of stage 4 for the trial. In one embodiment, the initial stage values may chosen such that if they are too easy (or too difficult), the next stage used will immediately be incremented (or decremented) one full stage. For example, assuming an adjustment increment/decrement of approximately .2, if 3.6 (which specifies stage 4) were found to be too difficult, the next value would be about 3.4 (specifying stage 3), whereas if 4 had been specified as the initial stage value and the trial were found to be too difficult, the next value (3.8) would still round to 4, and so no effective change would occur. Thus, the initial stage values may be set to real values.

As noted above, the initial anticipated threshold, the first stage value, the second stage value, and the threshold (determined below) may each specify or be associated with a respective number of distinct instructions in the sequence of instructions. Thus, for each track, increasing the stage value may include increasing the number of instructions in the sequence. Similarly, for each track, decreasing the stage value may include decreasing the number of instructions in the sequence. Increasing the stage value for a track may operate to make subsequent trials performed in that track more difficult, while decreasing the stage value for a track may operate to make subsequent trials performed in that track less difficult. Note that the adult's response to the trial conducted at a track's value may thus determine that track's next stage value via the maximum likelihood method.

In 4310, the presenting, receiving, and modifying described above may be performed with respect to each of a plurality of sequences of auditory instructions in an iterative manner to determine respective final stage values for the first track and the second track. In other words, method elements 4304 - 4308 may be performed for each of a plurality of instruction sequences to determine final stage values of the two tracks.

For example, in one embodiment, performing the presenting, receiving, and modifying, one or more times in an iterative manner may include performing trials in the first track and the second track in an alternating manner, or performing trials in the first track and the second track randomly with equal probability. As noted above, in either approach, over many trials the number of trials performed in each track are equal or at least approximately equal. Moreover, in accordance with QUEST or ZEST threshold determination techniques, repeating the presenting, receiving, and modifying, one or more times in an iterative manner may include repeating the presenting, receiving, and modifying, until the stage values of the first track and the second track have converged to values within a specified confidence interval, and where the values are within a specified distance from each other, or, until a specified number of trials have been conducted for each track (e.g., 20 per track).

In 4312, a threshold for the adult may be determined based on the respective final stage values for the first track and the second track, where the threshold is or includes the stage value associated with the specified performance level of the adult. In other words, a threshold stage value may be determined that specifies stimulus attributes at which the adult will generally fail some specified percentage of the time, e.g., 47.5%.

In preferred embodiments, determining a threshold for the adult based on the respective final stage values for the first track and the second track may include averaging the respective final stage values for the first track and the second track to determine the threshold for the adult. For example, averaging the respective final stage values for the first track and the second track to determine the threshold for the adult may include rounding the average of the respective final stage values for the first track and the second track to determine the threshold for the adult. Thus, a stage value of 4.6 corresponds to stage 5, and a stage value of 4.2 corresponds to stage 4.

In one embodiment, the presenting, receiving, and modifying described above may compose performing a trial. Certain information may be saved with respect to each trial performed, e.g., for operation of the method, and/or for subsequent analysis of the assessment. For example, for each trial, one or more of the following may be saved: which track was used in the trial, the stage value used in the trial, the series of auditory instructions presented to the adult, button-to-sound assignments, the series of selections by the adult, the correctness or incorrectness of the adult's response, the mean of a posterior probability distribution function for the maximum likelihood procedure, and the standard deviation of the posterior probability distribution function for the maximum likelihood procedure. Of course, any other type of information may also be saved as desired.

As indicated above, the adult may interact with the assessment process via a GUI presented on the computing device, similar to the GUI used in the training exercise (Listen and Do). However, some aspects of the exercise version of Listen and Do may not be necessary in the Listen and Do assessment. For example, a progress bar, points bar, and reward area included in the training exercise GUI (of Listen and Do) are not necessary, since progress/reward indicators may not be used in the assessment. However, in some embodiments, some of the GUI elements or assets may remain the same, such as the response buttons and the "ding" and "thump" sounds that play after an adult responds correctly or incorrectly. In some embodiments, the stimulus presentation may also be identical to the exercise version. In one embodiment, initially the only button in the screen is the start button. However, because the adult will not already know the number of instructions to be presented for each trial, in some embodiments, the number of instructions to be presented (and followed) may be displayed at the beginning of each trial so the adult knows how many instructions to expect to receive. After the adult clicks on the start button, the instructions may be played and the interface may be activated after the entire set of instructions is given, i.e., the various graphic objects may be selectable by the adult to carry out the instructions.

### Stimuli Specifications

The following describes exemplary stimulus data sets suitable for use in the above-described assessment method. It should be noted, however, that the data described is meant to be exemplary only, and is not intended to limit the data used in the invention to any particular data sets or attributes.

In one embodiment, for assessment purposes, the sound processing level for presentation of the instructions may be set at level 5, where level 5 is the level closest to human speech. This is in contrast to the processing levels used in the normal training exercise (Listen and Do), ranging from heavily processed synthetic speech (e.g., level 1), e.g., to emphasize distinguishing attributes of the aurally presented stimuli, through natural or near-natural processed speech (e.g., level 5).

In preferred embodiments, for assessment purposes, the sound processing level for presentation of instructions may be set at level 5, which is the level in which sounds are not emphasized but simply sped up. To avoid problems the adult might have with dragging and dropping items, in preferred embodiments, the stimulus category may be set at category 2, where the adult is only asked to select (i.e., click on) various objects on the interface. Thus, drag and drop commands may not be used for assessment purposes. Note that category 2 includes characters that are descriptive, e.g. the girl in the purple (green, red) dress, the tall (short) police officer, Washington (Lincoln) library, etc.). Said another way, in some embodiments, the stimulus category may be set at category 2, from among a plurality of available categories (see above), where, as described above, category 2 may include instructions to identify or select (e.g., click on) graphical objects or items presented on the display of the computing device, where the graphical objects in the instructions are modified by one or more adjectives and/or one or more prepositional phrases, although in other embodiments, other types of instructions may be used as desired.

As noted above, in preferred embodiments, the stage parameters may be the same as the stage parameters for the Listen and Do exercise, and may represent or correspond to the number of instructions given. For example, an exemplary stage 3 sequence of instructions may include three qualified selection instructions, e.g., click on the brown dog and then click on man in the red hard hat and then click on the sunshine bakery.

### Initialization Values

In one embodiment, initial values for the assessment process may be set at:
Initial stage values: 3.4 and 4.6
Confidence Interval: 0.95
Confidence Interval Width: 0.5
Standard deviation of cumulative Gaussian psychometric function: 0.8
Standard deviation of prior threshold distribution: 0.7.

However, it should be noted that in other embodiments, other values may be used as desired.

### Assessment and Exercise Performance

Maximum likelihood procedure based psychophysical threshold determination, such as described above with respect to various exemplary cognitive training exercises, may facilitate more effective use of such exercises by establishing a stimulus intensity for each exercise that is substantially optimal for improving the cognitive skills of the adult subject.

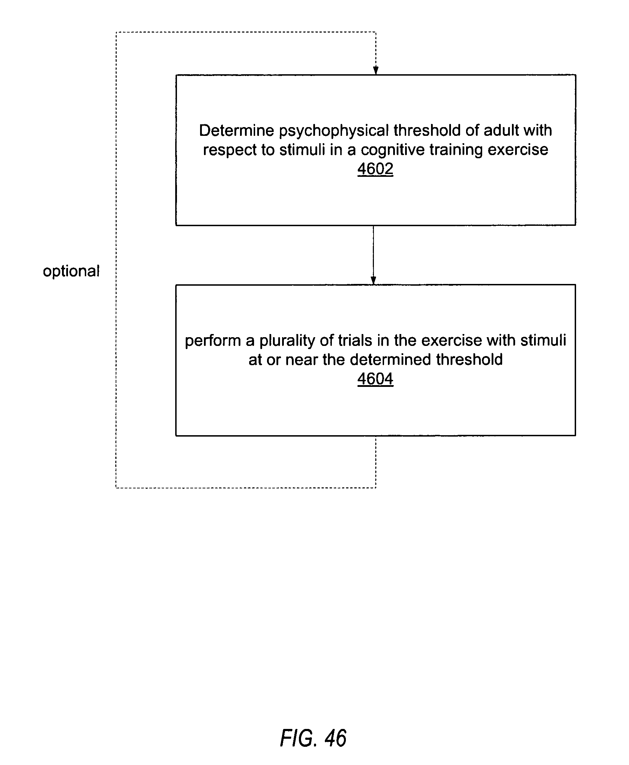

Figure 46 is a high level flowchart of one embodiment of a method for improving cognition and memory in an aging adult, utilizing a computing device to present stimuli to the adult, and to record responses from the adult. The method described below may utilize any of the various cognitive training exercises described herein, although it should be noted that any other cognitive training exercise may be used as desired. Note that in various embodiments, some of the method elements may be performed concurrently, in a different order than shown, or may be omitted. Additional method elements may also be performed. As shown, the method may operate as follows:

In 4602, a psychophysical threshold for an aging adult with respect to stimuli in a cognitive training exercise may be determined. As noted above, the threshold may comprise a stimulus intensity value associated with a specified performance level of the adult, and may be determined using a maximum likelihood procedure, such as, for example, a QUEST (quick estimation by sequential testing) threshold procedure, or a ZEST (zippy estimation by sequential testing) threshold procedure, as described above.

For example, similar to the assessments described above, in one embodiment, determining the psychophysical threshold may include initializing a first track to a first intensity value that is below an initial anticipated threshold, where the initial anticipated threshold comprises or includes an initial estimate of a stimulus intensity value for stimuli corresponding to a specified performance level of the adult. A second track may be initialized to a second stimulus intensity value that is above the initial anticipated threshold. A stimulus may then be presented to the adult via the computing device in accordance with the stimulus intensity value of a specified one of either the first track or the second track. For example, the stimuli may be presented via one or more of: headphones attached to the computing device, speakers attached to the computing device, and/or a display device attached to the computing device. A response to the stimulus may then be received from the adult via the computing device, and the stimulus intensity value of the specified track modified based on the adult's response in accordance with the maximum likelihood procedure. For example, in one embodiment, for each track, modifying the stimulus intensity value of the specified track based on the adult's response may include increasing the stimulus intensity value if the adult responds correctly in a specified percentage of trials, and decreasing the stimulus intensity value if the adult responds incorrectly in the specified percentage of trials.

In one embodiment, an indication of whether the adult responded correctly to the stimulus may be provided. For example, a respective sound and/or graphical indication indicating correctness or incorrectness may be presented. Additionally, or alternatively, points may be awarded (or possibly subtracted) based on the correctness of the adult's response.

This presenting, receiving, and modifying may be performed with respect to each of a plurality of stimuli in an iterative manner to determine respective final stimulus intensity values for the first track and the second track, after which a threshold for the adult may be determined based on the respective final stimulus intensity values for the first track and the second track, where the threshold is or includes the stimulus intensity value associated with the specified performance level of the adult. In other words, an assessment version of the cognitive training exercise may be performed to determine the psychophysical threshold for the adult with respect to that exercise. For example, determining a threshold for the adult based on the respective final stimulus intensity values for the first track and the second track may include averaging the respective final stimulus intensity values for the first track and the second track to determine the threshold for the adult. In one embodiment, averaging the respective final stimulus intensity values for the first track and the second track to determine the threshold for the adult may include rounding the average of the respective final stimulus intensity values for the first track and the second track to determine the threshold for the adult. Please see the above-described assessments for particular examples of such threshold determination with respect to specific exercises.

In one embodiment, performing the presenting, requiring, and modifying, one or more times in an iterative manner may include performing trials in the first track and the second track in an alternating manner, or, alternatively, performing trials in the first track and the second track randomly with equal probability, the idea being to perform substantially the same number of trials in each track over the duration of the determination process. In some embodiments, the presenting, requiring, and modifying, may be performed (iteratively) until either the stimulus intensity values of the first track and the second track have converged to stimulus intensity values within a specified confidence interval, where the stimulus intensity values are within a specified distance from each other, or a specified number of trials have been conducted for each track. In other words, in some embodiments, trials may be performed until one or these conditions obtains.

In one embodiment, the presenting, requiring, and modifying described above may compose performing a trial (in the determination process or assessment exercise of 4602). Moreover, the method may include saving various parameters or values for each trial performed, including, for example, one or more of: which track was used in the trial; the stimulus intensity value used in the trial; the stimulus presented to the adult; button to response assignments; the series of button selections by the adult; the correctness or incorrectness of the adult's response; the mean of a posterior probability distribution function for the maximum likelihood procedure; and the standard deviation of the posterior probability distribution function for the maximum likelihood procedure, among others.

Additionally, in some embodiments, the method may further include initializing various parameters, such as, for example, one or more of: initial stimulus intensity values of the first and second tracks; the standard deviation of a cumulative Gaussian psychometric function for the maximum likelihood procedure; and the standard deviation of a prior threshold distribution for the maximum likelihood procedure, among others.

In one embodiment, the method may include determining the initial anticipated threshold based on one or more of: the age of the adult, calibration trials performed by the adult, and/or calibration trials performed by other adults.

In 4604, a plurality of trials in the exercise may be performed with stimuli at or near the determined threshold to improve the adult's cognition and memory skills. In other words, the exercise may be performed based on the determined threshold. For example, the adult may be trained through repetitive trials at or near the determined threshold to increase the benefit of performing trials in the cognitive training exercise.

In some embodiments, performing a plurality of trials in the exercise with stimuli at or near the determined threshold may include: providing a set of stimuli for the cognitive training exercise. For each stimulus in the set of stimuli, the stimulus may be presented to the adult at or near the determined threshold via the computing device. A response to the presented stimulus may be received from the adult via the computing device, and a determination made as to whether the response is correct. An indication may then be provided as to whether the response is correct. The presenting, receiving, determining, and indicating may be repeated for each stimulus in the set of stimuli in an iterative manner to improve the adult's cognitive and memory skills. In one embodiment, this presenting, receiving, determining, and indicating for each stimulus in the set of stimuli may include increasing a difficulty level of the stimulus as the adult progresses through the exercise. Note that in preferred embodiments, the stimuli used in determining the psychophysical threshold may be or include a representative subset of the set of stimuli used in performing the plurality of trials in the exercise.

In one embodiment, presenting the stimulus to the adult at or near the determined threshold via the computing device may include presenting aural stimuli, e.g., spoken words phonemes, instructions, etc., and/or visual stimuli, e.g., images, text, etc., to the adult. Various examples of each are provided below with respect to the different exercise assessments described herein.

In preferred embodiments, the method may further include repeating the determining the psychophysical threshold and performing the plurality of trials in the exercise one or more times in an iterative manner to improve the adult's cognitive and memory skills. For example, the repetitions may be performed over a plurality of sessions, e.g., over days, weeks, or even months.

It should be noted that any of the techniques, parameters, and aspects disclosed above with respect to any of the various exercises and assessment methods described herein may be used with respect to any others of the exercises and assessment methods, as desired. In other words, any of the particular details described above with respect to any specific method may be used with respect to any of the other methods disclosed herein as desired, the above descriptions being meant to be exemplary only, and not to restrict embodiments of the invention to any particular form, appearance, or function.

Moreover, although the present invention and its objects, features, and advantages have been described in detail, other embodiments are encompassed by the invention. For example, particular advancement/promotion methodology has been thoroughly illustrated and described for each exercise. The methodology for advancement of each exercise is based on studies indicating the need for frequency, intensity, motivation and cross-training. However, the number of skill/complexity levels provided for in each exercise, the number of trials for each level, and the percentage of correct responses required within the methodology are not static. Rather, they may change, based on heuristic information, as more participants utilize the HiFi training and assessment programs. Therefore, modifications to advancement/progression methodology are anticipated. In addition, one skilled in the art will appreciate that the stimuli used for training, as detailed in the Appendices, are merely a subset of stimuli that can be used within a training or assessment environment similar to HiFi. Furthermore, although the characters, and settings of the exercises are entertaining, and therefore motivational to a participant, other storylines can be developed which would utilize the unique training and assessment methodologies described herein.

Finally, those skilled in the art should appreciate that they can readily use the disclosed conception and specific embodiments as a basis for designing or modifying other structures for carrying out the same purposes of the present invention without departing from the spirit and scope of the invention as defined by the appended claims. For example, various embodiments of the methods disclosed herein may be implemented by program instructions stored on a memory medium, or a plurality of memory media.

## Claims

1. A method for improving cognition and memory in an aging adult, utilizing a computing device to present stimuli to the adult, and to record responses from the adult, the method comprising the steps of:
determining a psychophysical threshold for an aging adult with respect to stimuli in a cognitive training exercise, wherein the threshold comprises a stimulus intensity value associated with a specified performance level of the adult, and wherein the threshold is determined using a maximum likelihood procedure; and
performing a plurality of trials in the exercise with stimuli at or near the determined threshold to improve the adult's cognition and memory skills.

2. The method as recited in claim 1, wherein the maximum likelihood procedure comprises one or more of:
a QUEST (quick estimation by sequential testing) threshold procedure; or
a ZEST (zippy estimation by sequential testing) threshold procedure.

3. The method of claim 1, wherein said determining the psychophysical threshold comprises:
initializing a first track to a first intensity value that is below an initial anticipated threshold, wherein the initial anticipated threshold comprises an initial estimate of a stimulus intensity value for stimuli corresponding to a specified performance level of the adult;
initializing a second track to a second stimulus intensity value that is above the initial anticipated threshold;
presenting a stimulus to the adult via the computing device, wherein said presenting is in accordance with the stimulus intensity value of a specified one of either the first track or the second track;
receiving a response to the stimulus from the adult via the computing device;
modifying the stimulus intensity value of the specified track based on the adult's response in accordance with the maximum likelihood procedure;
performing said presenting, said receiving, and said modifying with respect to each of a plurality of stimuli in an iterative manner to determine respective final stimulus intensity values for the first track and the second track; and
determining a threshold for the adult based on the respective final stimulus intensity values for the first track and the second track, wherein the threshold comprises the stimulus intensity value associated with the specified performance level of the adult.

4. The method as recited in claim 3, wherein said steps of presenting, requiring, and modifying compose performing a trial, the method further comprising:
for each trial, saving one or more of:
which track was used in the trial;
stimulus intensity value used in the trial;
stimulus presented to the adult;
button to response assignments;
series of button selections by the adult;
correctness or incorrectness of the adult's response;
mean of a posterior probability distribution function for the maximum likelihood procedure; and
standard deviation of the posterior probability distribution function for the maximum likelihood procedure.

5. The method as recited in claim 4, further comprising:
initializing one or more of:
initial stimulus intensity values of the first and second tracks;
standard deviation of a cumulative Gaussian psychometric function for the maximum likelihood procedure; and
standard deviation of a prior threshold distribution for the maximum likelihood procedure.

6. The method as recited in claim 3, wherein, for each track, said modifying the stimulus intensity value of the specified track based on the adult's response comprises:
increasing the stimulus intensity value if the adult responds correctly in a specified percentage of trials; and
decreasing the stimulus intensity value if the adult responds incorrectly in the specified percentage of trials.

7. The method as recited in claim 3, wherein said performing said presenting, requiring, and modifying, one or more times in an iterative manner comprises:
performing trials in the first track and the second track in an alternating manner; or
performing trials in the first track and the second track randomly with equal probability.

8. The method as recited in claim 3, wherein said performing said presenting, requiring, and modifying, one or more times in an iterative manner comprises:
performing said presenting, requiring, and modifying, until:
the stimulus intensity values of the first track and the second track have converged to stimulus intensity values within a specified confidence interval, and wherein the stimulus intensity values are within a specified distance from each other; or
a specified number of trials have been conducted for each track.

9. The method as recited in claim 3, wherein said determining a threshold for the adult based on the respective final stimulus intensity values for the first track and the second track comprises:
averaging the respective final stimulus intensity values for the first track and the second track to determine the threshold for the adult.

10. The method as recited in claim 9, wherein said averaging the respective final stimulus intensity values for the first track and the second track to determine the threshold for the adult comprises:
rounding the average of the respective final stimulus intensity values for the first track and the second track to determine the threshold for the adult.

11. The method as recited in claim 3, further comprising:
determining the initial anticipated threshold based on one or more of:
the age of the adult;
calibration trials performed by the adult; or
calibration trials performed by other adults.

12. The method of claim 3, further comprising:
indicating whether the adult responded correctly to the stimulus, comprising one or more of:
presenting a respective sound indicating correctness or incorrectness; and
presenting a respective graphical indication of correctness or incorrectness.

13. The method of claim 3, wherein the stimuli are presented via one or more of:
headphones attached to the computing device;
speakers attached to the computing device; or
a display device attached to the computing device.

14. The method of claim 1, wherein said performing a plurality of trials in the exercise with stimuli at or near the determined threshold comprises:
training the adult through repetitive trials at or near the determined threshold to increase the benefit of performing trials in the cognitive training exercise.

15. The method of claim 1, further comprising:
repeating said determining the psychophysical threshold and said performing the plurality of trials in the exercise one or more times in an iterative manner to improve the adult's cognitive and memory skills.

16. The method of claim 1, wherein said performing a plurality of trials in the exercise with stimuli at or near the determined threshold comprises:
providing a set of stimuli for the cognitive training exercise;
for each stimulus in the set of stimuli,
presenting the stimulus to the adult at or near the determined threshold via the computing device;
receiving a response to the presented stimulus from the adult via the computing device;
determining if the response is correct;
indicating whether the response is correct; and
repeating said presenting, said receiving, said determining, and said indicating for each stimulus in the set of stimuli in an iterative manner to improve the adult's cognitive and memory skills.

17. The method of claim 16, wherein the stimuli used in said determining the psychophysical threshold comprises a representative subset of the set of stimuli used in said performing the plurality of trials in the exercise.

18. The method of claim 16, wherein said presenting the stimulus to the adult at or near the determined threshold via the computing device comprises one or more of:
presenting aural stimuli; and/or
presenting visual stimuli.

19. The method of claim 16, wherein said presenting, said receiving, said determining, and said indicating for each stimulus in the set of stimuli comprises:
increasing a difficulty level of the stimulus as the adult progresses through the exercise.

20. A computer readable memory medium comprising program instructions for improving cognition and memory in an aging adult, utilizing a computing device to present stimuli to the adult, and to record responses from the adult, wherein the program instructions are executable by the computing device to perform:
determining a psychophysical threshold for an aging adult with respect to stimuli in a cognitive training exercise, wherein the threshold comprises a stimulus intensity value associated with a specified performance level of the adult, and wherein the threshold is determined using a maximum likelihood procedure; and
performing a plurality of trials in the exercise with stimuli at or near the determined threshold to improve the adult's cognition and memory skills.
